# EUROPEAN PATENT APPLICATION

(11) **EP 4 628 797 A1**
(43) Date of publication of application: **08.10.2025**
(21) Application number: 25161777.5
(22) Date of filing: 05.03.2025
(51) Int. Cl.: F23R 3/28, F23R 3/34

(54) **GAS TURBINE ENGINE AND FUEL NOZZLE ASSEMBLY THEREFOR**

(30) Priority: 01.04.2024 US 202418623664
(71) Applicant: General Electric Company, Cincinnati, Ohio 45215 (US)
(72) Inventor: NAIK, Pradeep, 45215 Evendale (US); SAMPATH, Karthikeyan, 45215 Evendale (US); BENJAMIN, Michael, 45215 Evendale (US); PAL, Sibtosh, 45215 Evendale (US); BUCARO, Michael, 45215 Evendale (US); BADHUK, Pabitra, 45215 Evendale (US); PET T, Prithiviraaj, 45215 Evendale (US); CHAKRABORTY, Aritra, 45215 Evendale (US)
(74) Representative: Openshaw & Co.

(57) **Abstract**

A gas turbine engine (10), comprising a compressor section (12), combustion section (14), and turbine section (16) in a serial flow arrangement, with the combustion section (14) comprising: a combustor liner (40) that at least partially defines a combustion chamber (50); and a gaseous fuel nozzle assembly (48), comprising: a rich fuel supply (102) to supply a rich mixture (106) of gaseous fuel (F) and air (70); a lean fuel supply (104) to supply a lean mixture (108) of gaseous fuel (F) and air (70) that is leaner than the rich mixture (106); a rich impingement tube (110) fluidly coupled to the rich fuel supply (102) to emit the rich mixture (106) into the combustion chamber (50); and a lean impingement tube (112) fluidly coupled to the lean fuel supply (104) to emit the lean mixture (108) into the combustion chamber (50).

## Description

### TECHNICAL FIELD

The present subject matter relates generally to a gas turbine engine having a fuel nozzle assembly.

### BACKGROUND

Turbine engines are driven by a flow of combustion gases passing through the engine to rotate a multitude of turbine blades, which, in turn, rotate a compressor to provide compressed air to the combustor for combustion. A combustor can be provided within the turbine engine and is fluidly coupled with a turbine into which the combusted gases flow.

Historically, hydrocarbon fuels are used in the combustor of a turbine engine. Generally, air and fuel are fed to a combustion chamber, the air and fuel are mixed, and then the fuel is burned in the presence of the air to produce hot gas. The hot gas is then fed to a turbine where it cools and expands to produce power. By-products of the fuel combustion typically include environmentally unwanted byproducts, such as nitrogen oxide and nitrogen dioxide (collectively called NOₓ), carbon monoxide (CO), unburned hydrocarbons (UHC) (e.g., methane and volatile organic compounds that contribute to the formation of atmospheric ozone), and other oxides, including oxides of sulfur (e.g., SO₂ and SO₃).

To reduce the environmentally unwanted byproducts, other fuels, such as hydrogen, are being explored. Hydrogen or hydrogen mixed with another element has a higher flame temperature than traditional hydrocarbon fuels. That is, hydrogen or a hydrogen mixed fuel typically has a wider flammable range and a faster burning velocity than traditional hydrocarbon-based fuels.

### BRIEF DESCRIPTION OF THE DRAWINGS

In the drawings:
FIG. 1 is a schematic view of a gas turbine engine having a compression section, a combustion section, and a turbine section in accordance with various aspects described herein.
FIG. 2 is a schematic view of the combustion section of FIG. 1 along line II-II in accordance with various aspects described herein.
FIG. 3 is a schematic view illustrating portions of a fuel nozzle assembly coupled to a combustion chamber in accordance with various aspects described herein.
FIG. 4A is a schematic view illustrating portions of a fuel nozzle assembly in accordance with various aspects described herein.
FIG. 4B is a schematic view illustrating portions of a fuel nozzle assembly, viewed from aft, in accordance with various aspects described herein.
FIG. 4C is a schematic view illustrating portions of a fuel nozzle assembly, viewed from aft, in accordance with various aspects described herein.
FIG. 5A is a schematic view illustrating portions of a fuel nozzle assembly in accordance with various aspects described herein.
FIG. 5B is a schematic view illustrating portions of a fuel nozzle assembly, viewed from aft, in accordance with various aspects described herein.
FIG. 5C is a schematic view illustrating portions of a fuel nozzle assembly, viewed from aft, in accordance with various aspects described herein.
FIG. 6 is a schematic view illustrating portions of a fuel nozzle assembly in accordance with various aspects described herein.
FIG. 7A is a schematic view illustrating portions of a fuel nozzle assembly with a premixing chamber in accordance with various aspects described herein.
FIG. 7B is a schematic view illustrating portions of a fuel nozzle assembly with a premixing chamber in accordance with various aspects described herein.
FIGS. 8A-8D are schematic cross-sectional views illustrating variations of impingement tubes of a fuel nozzle assembly in accordance with various aspects described herein.
FIGS. 9A-9D are schematic cross-sectional views illustrating variations of impingement tube outputs of a fuel nozzle assembly in accordance with various aspects described herein.
FIGS. 10A-10E are schematic cross-sectional views illustrating variations of premixing chamber outputs of a fuel nozzle assembly in accordance with various aspects described herein.
FIG. 11 is a schematic view illustrating portions of a fuel nozzle assembly, viewed from aft, in accordance with various aspects described herein.
FIG. 12 is a schematic view illustrating portions of a fuel nozzle assembly, viewed from aft, in accordance with various aspects described herein.
FIG. 13 is a schematic view illustrating portions of a fuel nozzle assembly, viewed from aft, in accordance with various aspects described herein.
FIG. 14A is a schematic view illustrating portions of a fuel nozzle assembly, viewed from aft, in accordance with various aspects described herein.
FIG. 14B is a schematic view illustrating portions of a fuel nozzle assembly, viewed from aft, in accordance with various aspects described herein.
FIG. 15 is a schematic view illustrating portions of a fuel nozzle assembly, viewed from aft, in accordance with various aspects described herein.
FIG. 16A is a schematic view illustrating a set of impingement tubes of a fuel nozzle assembly, viewed from aft, in accordance with various aspects described herein.
FIG. 16B is a schematic view illustrating a set of impingement tubes of a fuel nozzle assembly, viewed from aft, in accordance with various aspects described herein.
FIG. 16C is a schematic view illustrating a set of impingement tubes of a fuel nozzle assembly, viewed from aft, in accordance with various aspects described herein.
FIG. 16D is a schematic view illustrating a set of impingement tubes of a fuel nozzle assembly, viewed from aft, in accordance with various aspects described herein.
FIG. 16E is a schematic view illustrating a set of impingement tubes of a fuel nozzle assembly, viewed from aft, in accordance with various aspects described herein.
FIG. 16F is a schematic view illustrating a set of impingement tubes of a fuel nozzle assembly, viewed from aft, in accordance with various aspects described herein.
FIG. 17A is a schematic view illustrating portions of a fuel nozzle assembly in accordance with various aspects described herein.
FIG. 17B is a schematic view illustrating portions of a fuel nozzle assembly, viewed from aft, in accordance with various aspects described herein.
FIG. 18A is a schematic view illustrating a set of impingement tubes of a fuel nozzle assembly, viewed from aft, in accordance with various aspects described herein.
FIG. 18B is a schematic view illustrating a set of impingement tubes of a fuel nozzle assembly, viewed from aft, in accordance with various aspects described herein.
FIG. 18C is a schematic view illustrating a set of impingement tubes of a fuel nozzle assembly, viewed from aft, in accordance with various aspects described herein.
FIG. 19 is a schematic view illustrating portions of a fuel nozzle assembly coupled to a combustion chamber in accordance with various aspects described herein.
FIG. 20A is a schematic view illustrating portions of a fuel nozzle assembly in accordance with various aspects described herein.
FIG. 20B is a schematic view illustrating portions of a fuel nozzle assembly, viewed from aft, in accordance with various aspects described herein.

### DETAILED DESCRIPTION

Aspects of the disclosure described herein are directed to a combustor. With some aspects, the disclosed combustors and fuel nozzle assemblies can be utilized with gaseous fuel, such as hydrogen. Gaseous fuel, including hydrogen, spreads/disperses at a faster rate than atomized liquid fuel, which can involve less mixing time for the gaseous fuel, fuel mixing tube lengths can be shorter, and the flame from the gaseous fuel may be more likely to spread farther and faster, which can increase the risk of flashback and flameholding (e.g., in a nozzle or mixer), and increase the impact of controlling the flame and limiting flame spread by controlling the dispersion of the gaseous fuel.

Many other possible aspects and configurations in addition to those shown in the included figures are contemplated by the present disclosure. For example, the disclosed fuel nozzles can provide greater flame stability, lower flame temperatures, reduced flashback, reduced flameholding, and lower NOₓ emissions relative to other designs, such as designs that utilize only a single fuel-air mixture, only axial fuel passages, or are not configured for use with gaseous fuels, such as hydrogen gas. Impingement tubes at the dome wall can operate with extreme rich (e.g., equivalence ratio of at last 4) fuel-air mixtures and other impingement tubes at the dome wall can operate with extreme lean (e.g., equivalence ratio 0.4 or less) fuel-air mixtures to achieve lower flame speed to avoid flash back and flameholding within each impingement tube. The rich mixture can provide flame stability and the lean mixture can provide lower NOₓ emissions and limit temperatures. Rich flames from relatively rich mixtures after mixing can provide stability to lean flames from lean mixtures. The impinging configuration of the impingement tubes can create high turbulence downstream of the dome wall to mix lean and rich mixtures rapidly for lower NOₓ emission, such as via two or more impingement tubes impinging at one location or zone. Multiple impinging tubes can achieve quick mixing of fuel and air downstream of dome for lower NOₓ emissions. Co-flowing air around fuel rich tubes can limit high temperatures close to dome wall and penetrate rich mixtures away from dome wall. The impingement tubes can be directly opposing to create impingement and lateral spread of flow for mixing. The impingement tubes can be offset from each other to create a swirling motion post impingement for achieving rapid mixing. The multiple compact flame structure can provide lower NOₓ emissions.

Impingement tube outputs can be angled to provide swirling to improve mixing and to cover a bigger area on the dome wall. Multiple impingement tubes can be placed in different rows in circular patterns to achieve uniform mixing in the combustion chamber, near the dome wall, or both. Mixing zones formed post impingement of the impingement tubes can be interlaced to improve mixing further. Two or more rich impingement tubes can be made to impinge to form one portion of an impingement zone and two or more lean impingement tubes can be made to impinge to form another portion of the impingement zone, and overlap of the portions of the impingement zone can be established to improve mixing. The impingement tubes can impinge in a premixing chamber at the dome wall. The premixing chamber can have a relatively short length to rapidly mix fuel and air, rich and lean mixtures, or both, such as to limit NOₓ emissions. The premixing chamber can have a converging configuration to limit low velocity regions to avoid flashback and flameholding in the premixing chamber.

For purposes of illustration, the present disclosure will be described with respect to a turbine engine. It will be understood, however, that aspects of the disclosure described herein are not so limited. A combustor as described herein can be implemented in various engines, including but not limited to turbojet, turboprop, turboshaft, and turbofan engines. Aspects of the disclosure discussed herein may have general applicability within non-aircraft engines having a combustor, such as other mobile applications and non-mobile industrial, commercial, and residential applications.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", "third," etc. may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid. The term "fluidly coupled" means that a fluid is capable of making the connection between the areas specified.

The term "nozzle" has been used in various ways in the context of gas turbine engines. In the instant application, "nozzle" refers to a component having a portion for fluid coupling to a fuel supply and having at least one portion for fluidly coupling with a combustor portion, a combustor liner, a combustion chamber, or combinations thereof.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only, and the dimensions, positions, order, and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

Uses of "and" and "or" are to be construed broadly. For example and without limitation, uses of "and" do not necessarily require all elements or features listed, and uses of "or" are inclusive unless such a construction would be illogical.

Approximating language, as used herein throughout the specification and claims, is applied to modify any quantitative representation that could permissibly vary without resulting in a change in the basic function to which it is related. Accordingly, a value modified by a term or terms, such as "about", "approximately", "generally", and "substantially", are not to be limited to the precise value specified. In at least some instances, the approximating language may correspond to the precision of an instrument for measuring the value, or the precision of the methods or machines for constructing or manufacturing the components and systems. In at least some instances, the approximating language may correspond to the precision of an instrument for measuring the value, or the precision of the methods or machines for constructing or manufacturing the components and systems. For example, the approximating language may refer to being within a 1, 2, 4, 5, 10, 15, or 20 percent margin in either individual values, range(s) of values and endpoints defining range(s) of values. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

"Proximate" as used herein is a descriptor for locating parts described herein. Further, the term "proximate" means nearer or closer to the part recited than the following part. For example, a first hole proximate a wall, the first hole located upstream from a second hole means that the first hole is closer to the wall than the first hole is to the second hole.

Additionally, as used herein, a "controller" can include a component configured or adapted to provide instruction, control, operation, or any form of communication for operable components to effect the operation thereof. A controller can include any known processor, microcontroller, or logic device, including, but not limited to: field programmable gate arrays (FPGA), an application specific integrated circuit (ASIC), a full authority digital engine control (FADEC), a proportional controller (P), a proportional integral controller (PI), a proportional derivative controller (PD), a proportional integral derivative controller (PID controller), proportional resonant controller (PR), a hardware-accelerated logic controller (e.g. for encoding, decoding, transcoding, etc.), the like, or a combination thereof. Non-limiting examples of a controller can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. While "program code" is described, non-limiting examples of operable or executable instruction sets can include routines, programs, objects, components, data structures, algorithms, etc., that have the technical effect of performing particular tasks or implement particular abstract data types. In another non-limiting example, a controller can also include a data storage component accessible by the processor, including memory, whether transient, volatile or non-transient, or non-volatile memory.

Additional non-limiting examples of the memory can include Random Access Memory (RAM), Read-Only Memory (ROM), flash memory, or one or more different types of portable electronic memory, such as discs, DVDs, CD-ROMs, flash drives, universal serial bus (USB) drives, the like, or any suitable combination of these types of memory. In one example, the program code can be stored within the memory in a machine-readable format accessible by the processor. Additionally, the memory can store various data, data types, sensed or measured data values, inputs, generated or processed data, or the like, accessible by the processor in providing instruction, control, or operation to effect a functional or operable outcome, as described herein. In another non-limiting example, a controller can be configured for comparing a first value with a second value, and operating and controlling operations of additional components based on the satisfying of that comparison. For example, when a sensed, measured, or provided value is compared with another value, including a stored or predetermined value, the satisfaction of that comparison can result in actions, functions, or operations controllable by the controller.

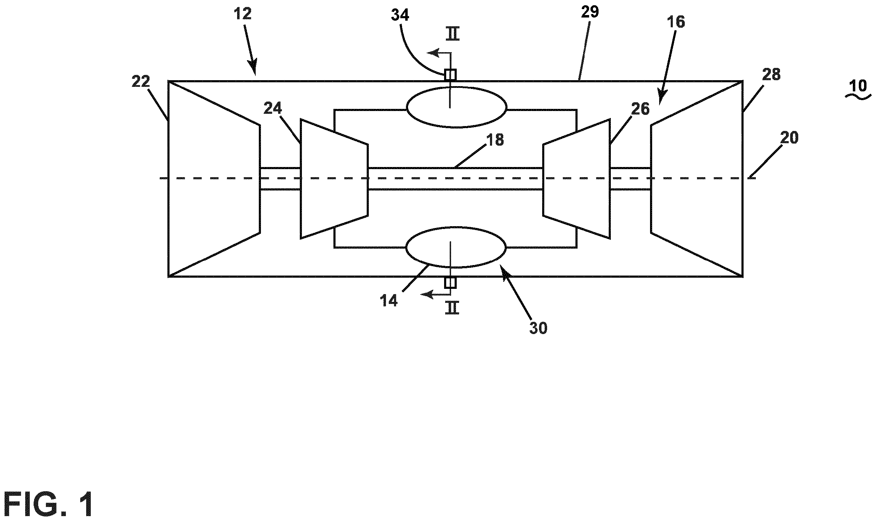

FIG. 1 is a schematic view of a gas turbine engine 10. As a non-limiting example, the turbine engine 10 can be used within an aircraft. The turbine engine 10 can include, at least, a compressor section 12, a combustion section 14, and a turbine section 16. A drive shaft 18 rotationally couples the compressor section 12 and turbine section 16, such that rotation of one affects the rotation of the other, and defines a rotational axis 20 for the turbine engine 10.

The compressor section 12 can include a low-pressure (LP) compressor 22, and a highpressure (HP) compressor 24 serially fluidly coupled to one another. The turbine section 16 can include an HP turbine 26, and an LP turbine 28 serially fluidly coupled to one another. The drive shaft 18 can operatively couple the LP compressor 22, the HP compressor 24, the HP turbine 26 and the LP turbine 28 together. Alternatively, the drive shaft 18 can include an LP drive shaft (not illustrated) and an HP drive shaft (not illustrated). The LP drive shaft can couple the LP compressor 22 to the LP turbine 28, and the HP drive shaft can couple the HP compressor 24 to the HP turbine 26. An LP spool can be defined as the combination of the LP compressor 22, the LP turbine 28, and the LP drive shaft such that the rotation of the LP turbine 28 can apply a driving force to the LP drive shaft, which in turn can rotate the LP compressor 22. An HP spool can be defined as the combination of the HP compressor 24, the HP turbine 26, and the HP drive shaft such that the rotation of the HP turbine 26 can apply a driving force to the HP drive shaft which in turn can rotate the HP compressor 24.

The compressor section 12 can include a plurality of axially spaced stages. Each stage includes a set of circumferentially-spaced rotating blades and a set of circumferentially-spaced stationary vanes. The compressor blades for a stage of the compressor section 12 can be mounted to a disk, which is mounted to the drive shaft 18. Each set of blades for a given stage can have its own disk. The vanes of the compressor section 12 can be mounted to a shroud or casing 29, which can extend circumferentially about and enshroud one or more sections of the turbine engine 10. It will be appreciated that the representation of the compressor section 12 is merely schematic and that there can be any number of blades, vanes and stages. Further, it is contemplated that there can be any number of other components within the compressor section 12.

Similar to the compressor section 12, the turbine section 16 can include a plurality of axially spaced stages, with each stage having a set of circumferentially-spaced, rotating blades and a set of circumferentially-spaced, stationary vanes. The turbine blades for a stage of the turbine section 16 can be mounted to a disk which is mounted to the drive shaft 18. Each set of blades for a given stage can have its own disk. The vanes of the turbine section 16 can be mounted to the shroud or casing 29 in a circumferential manner. It is noted that there can be any number of blades, vanes and turbine stages as the illustrated turbine section 16 is merely a schematic representation. Further, it is contemplated that there can be any number of other components within the turbine section 16.

The combustion section 14 can be provided serially between the compressor section 12 and the turbine section 16. The combustion section 14 can be fluidly coupled to at least a portion of the compressor section 12 and the turbine section 16 such that the combustion section 14 at least partially fluidly couples the compressor section 12 to the turbine section 16. As a non-limiting example, the combustion section 14 can be fluidly coupled to the HP compressor 24 at an upstream end of the combustion section 14 and to the HP turbine 26 at a downstream end of the combustion section 14. The combustion section 14 can include a combustor 30 fluidly coupled to a fuel source 34.

During operation of the turbine engine 10, ambient or atmospheric air is drawn into the compressor section 12 via a fan (not illustrated) upstream of the compressor section 12, where the air is compressed defining a pressurized air. The pressurized air can then flow into the combustion section 14 where the pressurized air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the turbine engine 10 via an exhaust section (not illustrated) downstream of the turbine section 16. The driving of the LP turbine 28 drives the LP spool to rotate the fan (not illustrated) and the LP compressor 22. The pressurized airflow and the combustion gases can together define a working airflow that flows through the fan, compressor section 12, combustion section 14, and turbine section 16 of the turbine engine 10.

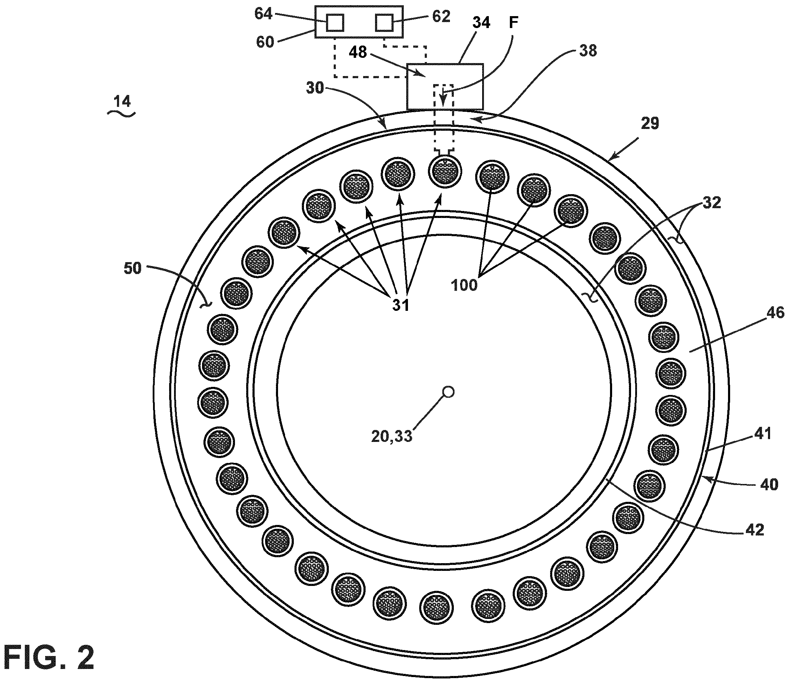

FIG. 2 depicts a cross-sectional view of the combustion section 14 along line II-II of FIG. 1. The combustion section 14 can include the combustor 30 with an annular arrangement of combustor portions 31 disposed around the centerline or rotational axis 20 of the turbine engine 10 (e.g., circumferentially spaced from each other in an annular configuration) (FIG. 1). The combustor portions 31 can, in some configurations, include or be configured as combustor cups, fuel cups, or nozzle cups. A fuel nozzle assembly 48 can be connected to each combustor portion 31. The combustor 30 can have a can, can-annular, or annular arrangement depending on the type of engine in which the combustor 30 is located. In a non-limiting example, the combustor 30 can have a combination arrangement located with the shroud or casing 29 of the turbine engine 10 (FIG. 1). The shroud or casing 29 can enshroud or cover at least a portion of the combustion section 14.

The combustor 30 can be at least partially defined by a combustor liner 40. In some examples, the combustor liner 40 can include an outer liner 41 and an inner liner 42 concentric with respect to each other and arranged in an annular fashion about the engine centerline or rotational axis 20. In some examples, the combustor liner 40 can have an annular structure about the combustor 30. In some examples, the combustor liner 40 can include multiple segments or portions collectively forming the combustor liner 40. In some examples, the combustor liner 40 can have an annular structure about the combustor 30. In some examples, the combustor liner 40 can include multiple segments or portions collectively forming the combustor liner 40. In some examples, the combustor liner 40 can include the outer liner 41 radially spaced from the inner liner 42. In some examples, the combustor liner 40 can include a single liner.

The combustor liner 40 can at least partially define a combustion chamber 50 arranged annularly about the rotational axis 20. For example, a dome wall 46 may be substantially perpendicular to the rotational axis 20 and can cooperate with the outer liner 41, the inner liner 42, or both, to at least partially define the combustion chamber 50. A compressed air passage 32 can be defined at least in part by both the combustor liner 40 and the casing 29.

The combustor 30 can include or be fluidly coupled to the fuel source 34 (e.g., an external fuel manifold). The fuel nozzle assembly 48 fluidly couples the fuel source 34 with the combustor portions 31 and the combustion chamber 50. The fuel nozzle assembly 48 can include a fuel nozzle body 38 and at least a portion of the dome wall 46. A fuel F can include any suitable fuel, including gaseous fuel, such as hydrogen fuel, in non-limiting examples, which can include 100% H₂ (e.g., without a diluent). For example, the fuel nozzle assembly 48 can be a gaseous fuel nozzle assembly, such as a gaseous hydrogen fuel nozzle assembly. The combustor portions 31 can be separately connected to the dome wall 46. For example and without limitation, the combustor portions 31 can be connected to the dome wall 46 in a circumferentially spaced configuration. The combustor portions 31 can be disposed at a radial distance from the rotational axis 20 that is greater than a radial distance of the inner liner 42 and less than a radial distance of the outer liner 41. A controller 60 can be connected to and at least partially control operation of the fuel source 34, the fuel nozzle assembly 48, or both. The controller 60 can include a processor 62 and a memory 64. A centerline 33 of the combustion section 14 can be concentric with the rotational axis 20. The fuel nozzle assembly 48 includes the set of impingement tubes 100.

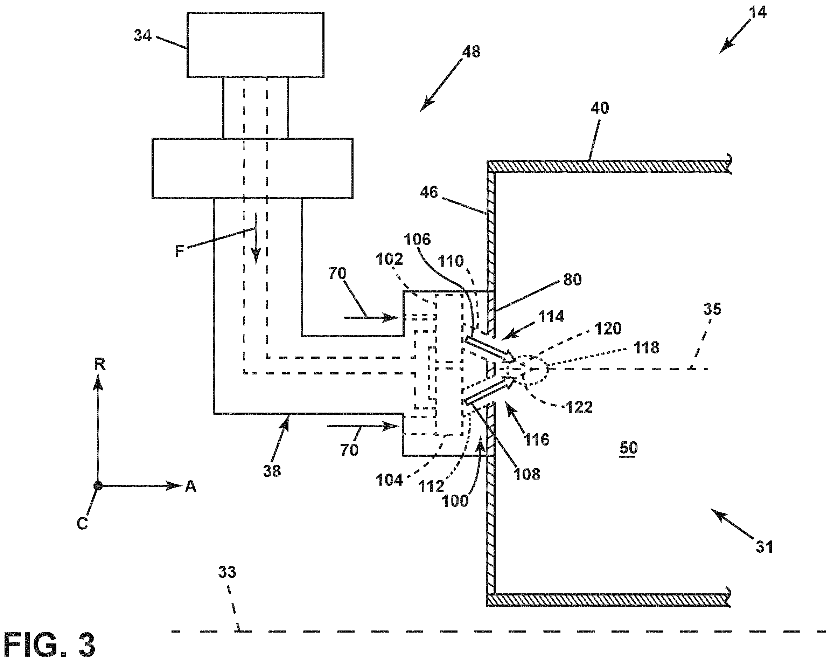

FIG. 3 is a schematic view of an example of one of the combustor portions 31, which can be provided, at least in part, by the fuel nozzle assembly 48. The fuel nozzle assembly 48 can include a wall 80 coupled, directly or indirectly, with the combustor liner 40. The wall 80 can at least partially define the dome wall 46. For example, the fuel nozzle assembly 48 can provide at least a portion of the dome wall 46. The centerline 33 of the combustion section 14 can define a radial direction R, an axial direction A, and a circumferential direction C. The fuel nozzle assembly 48 can include a centerline 35 that is parallel with and radially offset from the centerline 33. The centerline 35 can be concentric with a centerline of the combustor portion 31 to which the fuel nozzle assembly 48 is connected.

The fuel nozzle assembly 48 includes the set of impingement tubes 100, a first fluid supply 102, and a second fluid supply 104. The first fluid supply 102 can provide a first fluid 106. The second fluid supply 104 can provide a second fluid 108. The set of impingement tubes 100 can include a first impingement tube 110 and a second impingement tube 112 that extend through the wall 80, such as to the combustion chamber 50. The first impingement tube 110 and the second impingement tube 112 can have outputs 114, 116 at an aft surface of the wall 80. The first impingement tube 110 can be configured as a rich impingement tube for rich fuel and can be fluidly coupled with the first fluid supply 102. The first fluid supply 102 can, by way of further non-limiting example, be configured as a rich fuel supply that provides the first fluid 106 as a rich mixture of fuel F (e.g., gaseous fuel) and air 70, such as to the first impingement tube 110, which can emit the first fluid 106 (e.g., the rich mixture) into the combustion chamber 50. The first fluid supply 102 can be fluidly coupled with the fuel source 34 and a source of air 70, such as the compressor section 12 (FIG. 1). The second fluid supply 104 can, for example, be configured as a lean fuel supply that provides the second fluid 108 as a lean mixture of fuel F and air 70, such as to the second impingement tube 112, which can emit the second fluid 108 (e.g., the lean mixture) into the combustion chamber 50. The first fluid supply 102 may mix a greater amount of fuel F with air 70 per unit volume of fluid than the second fluid supply 104 such that the rich mixture has a higher fuel-air ratio than the lean mixture. In some examples, the rich mixture can have an equivalence ratio of at least 4 and less than or equal to 10. The equivalence ratio can be a ratio of the fuel-air ratio to a stoichiometric fuel-air ratio. Additionally or alternatively, the lean mixture can include an equivalence ratio that is greater than 0 and less than or equal 0.4 (e.g., 10% or less than the rich mixture). Such lean fuel-air mixtures reduce flame speed in the combustion chamber 50, which reduces flashback and flameholding in the fuel nozzle assembly 48, and reduces damage to the fuel nozzle assembly and components connected thereto. For example, flame speed is reduced with both very lean fuel-air mixtures (e.g., equivalence ratios of 0 to 0.4) and very rich fuel -air mixtures (e.g., equivalence ratios of at least 4).

In some examples, the first fluid supply 102 can provide greater than or equal to 0% and less than or equal to 30% of the total amount of air 70 provided by the fuel nozzle assembly 48 to the combustion chamber 50. The second fluid supply 104 can provide the remainder of air 70 (e.g., 70% to 100%). Utilizing fluid with lesser amounts of air 70 (e.g., the first fluid 106) creates richer fuel-air mixtures compared to fluids with greater amounts of air 70 (e.g., the second fluid 108). In some examples, the total amount of fuel in the first and second fluids 106, 108 can be the same and the greater amount of air in the second fluid 108 can provide a leaner fuel-air mixture.

In some configurations, the second fluid supply 104 can provide air 70 without fuel F (e.g., the second fluid 108 can include a fuel-air ratio of 0).

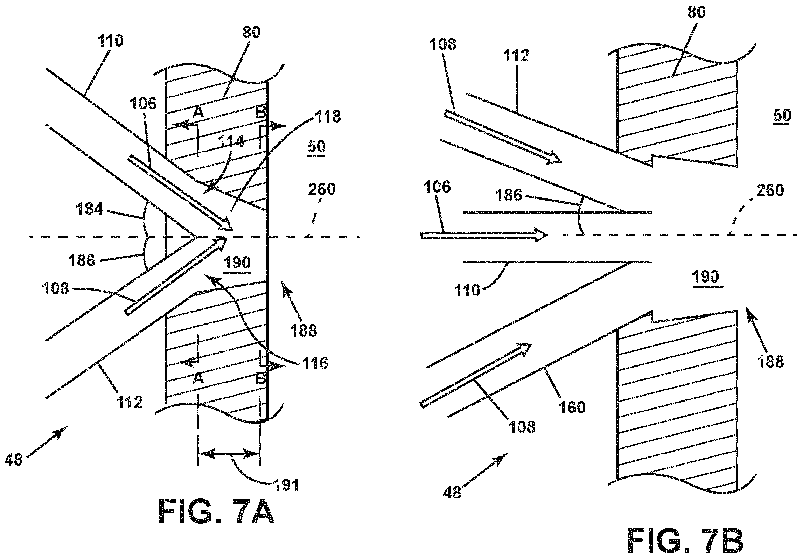

The first impingement tube 110 and the second impingement tube 112 can be arranged in an impinging configuration. The impinging configuration can include the first impingement tube 110 and second impingement tube 112 being arranged such the fluids exiting the outputs 114, 116 impinge on and mix with each other in an impingement zone 118 aft of the outputs 114, 116, such as in the combustion chamber 50, in a premixing chamber 190 (FIG. 7A), or both. Optionally, centerlines 120, 122 of the first impingement tube 110 and the second impingement tube 112 can be angled toward each other as they extend aft, intersect aft of the outputs 114, 116 (e.g., in the combustion chamber 50), or both. The impinging configuration can facilitate rapid mixing of rich fuel mixtures with lean fuel mixtures downstream of the wall 80 and the dome wall 46. Providing the first fluid 106 (e.g., the rich fuel-air mixture) via the first impingement tube 110 and providing the second fluid 108 (e.g., the lean fuel-air mixture) via the second impingement tube 112 can reduce flame speed, avoid flashback, and avoid flameholding. The set of impingement tubes 100 can be configured as separate tubes, fluid passages in the fuel nozzle body 38 of the fuel nozzle assembly 48, or combinations thereof. The impingement zone 118 can be disposed in the combustion chamber 50, the premixing chamber 190 (FIG. 7A), or both. The impingement zone 118 can, for example, comprise a portion of the volume of the combustion chamber 50, the premixing chamber 190 (FIG. 7A), or both, in which fluids from different impingement tubes of one or more sets of impingement tubes 100 impinge on each other, mix with each other, or both.

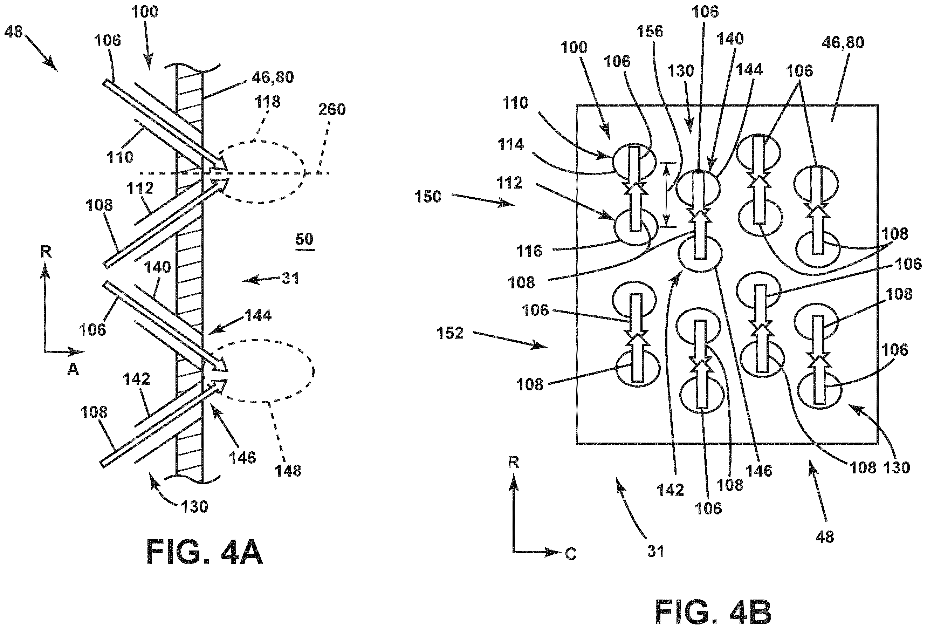

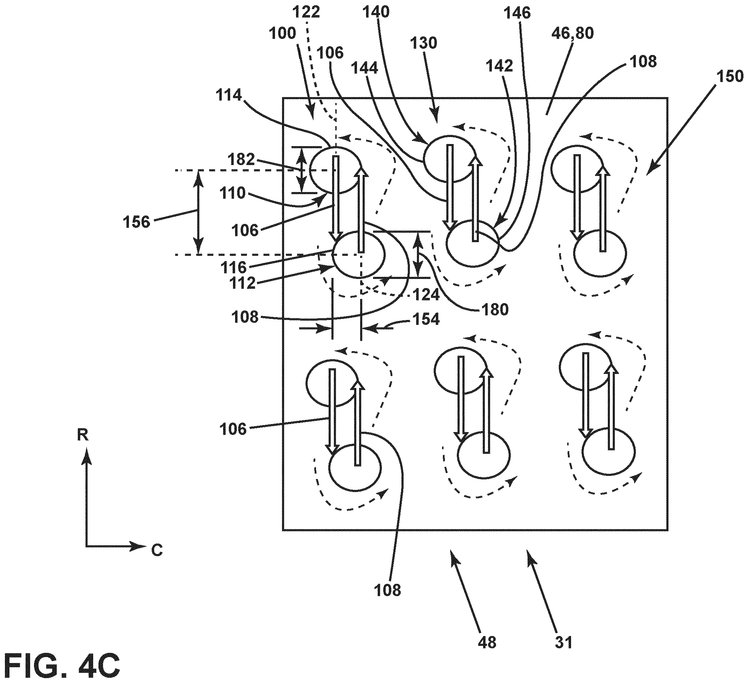

Referring to FIGS. 4A, 4B, and 4C, the fuel nozzle assembly 48 can include one or more additional sets of impingement tubes 130 extending through the wall 80, such as to emit fluid into the combustion chamber 50. The additional sets of impingement tubes 130 can each include an additional first impingement tube 140 (e.g., an additional rich impingement tube) fluidly coupled with the first fluid supply 102 (FIG. 3) and the combustion chamber 50, and include an additional second impingement tube 142 (e.g., an additional lean impingement tube) fluidly coupled with the second fluid supply 104 (FIG. 3) and the combustion chamber 50. The additional first impingement tube 140 and the additional second impingement tube 142 can include respective outputs 144, 146 at the aft surface of the wall 80. The additional sets of impingement tubes 130 can be disposed in a second impinging configuration that can be the same or similar to the impinging configuration of the first set of impingement tubes 100. The second impinging configuration can include the additional first impingement tube 140 and the additional second impingement tubes 142 being arranged to emit fluid that impinges at an impinging zone 148 aft of the outputs 144, 146, such as in the combustion chamber 50, the premixing chamber 190 (FIG. 7A), or both.

The sets of impingement tubes 100, 130 can be disposed in a variety of configurations. For example, the sets of impingement tubes 100, 130 can be disposed in rows, such as a first row 150 and a second row 152 (FIG. 4B), which can include staggered rows with adjacent pairs of rich and lean impingement tubes partially offset one or more directions, such as in the radial direction R. While pairs of impingement tubes of the sets of impingement tubes 100, 130 are shown offset in the radial direction R, the impingement tubes can be offset in other directions, such as the circumferential direction C relative to the centerline 33 or the radial direction R and the circumferential direction C (see, e.g., FIG. 4C), and may be disposed in groups of more than two. The first and second rows 150, 152 can be spaced, at least partially, in a radial direction R relative to the centerline 33 (FIG. 3) of the combustion section 14 (FIG. 2). The first row 150 and the second row 152 can have the same or different configurations. A different configuration can include the first fluid 106 being provided by the radially outward tubes and the second fluid 108 being provided by the radially inward tubes in the first row 150, and the first fluid 106 and the second fluid 108 being provided by alternating radially inward and radially outward tubes in the second row 152.

Referring to FIG. 4C, the first impingement tube 110 and the second impingement tube 112 can be offset to some degree such that their centerlines 122, 124 do not intersect, which can reduce impingement to some extent (e.g., relative to configurations with intersecting centerlines), but can still involve at least some impingement and provide or increase swirling (e.g., after impingement) to facilitate mixing of the first fluid 106 and the second fluids 108 aft of the outputs 114, 116. Multiple sets of impingement tubes 100, 130 can be provided to facilitate rapid mixing of fuel F and air 70. The first impingement tube 110 and the second impingement tube 112 can include diameters 180, 182 (e.g., hydraulic diameters), which can be measured at their outputs 114, 116. An offset distance 154 between centerlines of the first impingement tube 110 and the second impingement tube 112 (e.g., shown as generally in the circumferential direction C in FIG. 4C) can, for example, be greater than 0 and less than or equal to 1.0 times the diameter of the first impingement tube 110 and the second impingement tube 112 (e.g., diameter 180 or diameter 182), or the smaller of the diameters 180, 182 if the diameters 180, 182 are not the same size. In some examples, the diameters 180, 182 can be greater than or equal to 0.01 inches (0.25 cm) and less than or equal to 2.0 inches (5.8 cm). Offset distances between impingement tubes 100, such as distances 154 can create the impingement zone 118 such that the first and second fluids 106, 108 shear and create a tangential turning action, which creates swirl to achieve better mixing between the first and second fluids 106, 108. Improved mixing provides more uniform temperature distribution, which provides lower NOₓ emissions.

A center-to-center distance 156 between the first impingement tube 110 and the second impingement tube 112 can, for example, be greater than or equal to 100% and less than or equal to 2000% of the smaller of the diameter 180, 182, if they are not the same size. With some examples, the center-to-center distance 156 offsetting the outputs 114,116 of the first impingement tube 110 and the second impingement tube 112 is greater than or equal to the diameter 180 of the first impingement tube 110 and less than or equal to 20 times the diameter 180 of the first impingement tube 110. Additionally or alternatively, the center-to-center distance 156 offsetting the outputs 114, 116 is greater than or equal to the diameter 182 of the second impingement tube 112 and less than or equal to 20 times the diameter 182 of the second impingement tube 112. Increasing the offset distance 156 moves the impingement zone 118 farther from the dome wall 46 and the wall 80, which reduces temperatures at the dome wall 46 and the wall 80. Decreasing the offset distance 156 moves the impingement zone 118 closer to the dome wall 46 and the wall 80, which increases temperature, but the speed of the first and second fluids 106, 108 will be higher in the impingement zone 118, which improves turbulence and mixing.

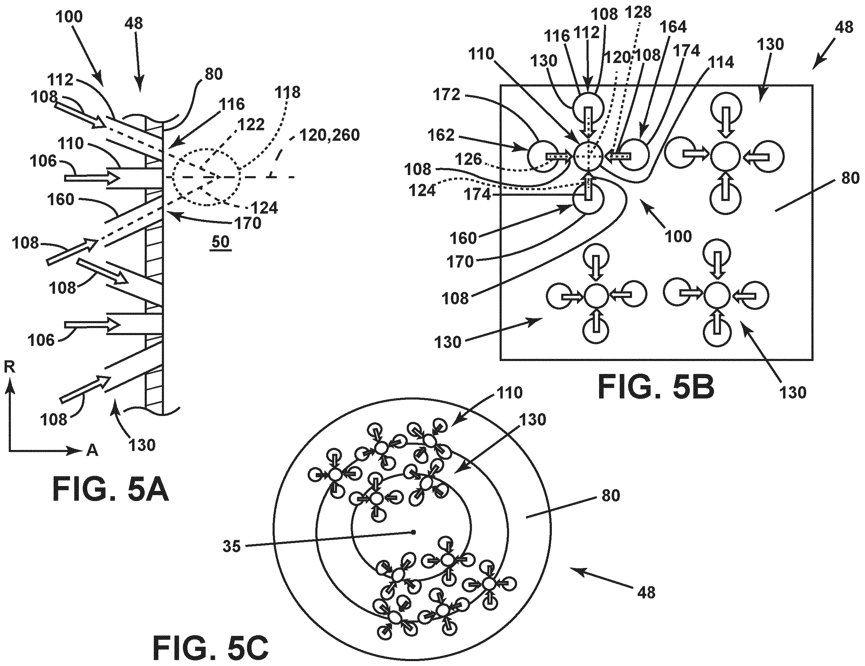

Referring to FIG. 5A, the set of impingement tubes 100 can include one or more additional impingement tubes, such as a third impingement tube 160, extending to and emitting fluid into the combustion chamber 50, the premixing chamber 190 (FIG. 7A), or both. The third impingement tube 160 can be disposed in the impinging configuration with the first impingement tube 110 and the second impingement tube 112 such that fluid emitted from the first, second, and third impingement tubes 110, 112, 160 impinge on and mix with each other in the impingement zone 118. The third impingement tube 160 includes an output 170. The first impingement tube 110 can be disposed such that its centerline 120 is parallel with the axial direction A relative to the centerline 33 (FIG. 2) of the combustion section 14 (FIG. 2), concentric with a centerline 260 of the set of impingement tubes 100, or both. The second impingement tube 112 and the third impingement tube 160 can be disposed at opposite sides of the first impingement tube 110, can be angled toward the first impingement tube 110, or both. For example, the centerline 122 of the second impingement tube 112 and a centerline 124 of the third impingement tube 160 can be angled inward toward the centerline 120 as the second and third impingement tubes 112, 160 extend aft. In some configurations, the centerlines 122, 124 intersect with the centerline 120 aft of the output 114, such as in the combustion chamber 50. The third impingement tube 160 can be fluidly coupled with the second fluid supply 104 (FIG. 3) such that the third impingement tube 160 functions as a second lean impingement tube and also emits the second fluid 108 into the combustion chamber 50.

Referring to FIG. 5B, the one or more additional impingement tubes of the set of impingement tubes 100 can include a fourth impingement tube 162 and a fifth impingement tube 164 that can be disposed in the impinging configuration with the first, second, and third impingement tubes 110, 112, 160 and include outputs 172, 174, respectively. The fourth impingement tube 162 and the fifth impingement tube 164 can be fluidly coupled with the second fluid supply 104 (FIG. 3) and can be configured as lean impingement tubes (e.g., third and fourth lean impingement tubes) that emit the second fluid 108 (e.g., a lean mixture) into the combustion chamber 50 (FIG. 5A). The fourth impingement tube 162 and the fifth impingement tube 164 can be disposed at opposite sides of the first impingement tube 110, can be circumferentially offset (e.g., about the centerline 120) from the second and third impingement tubes 112, 160, can be angled toward the first impingement tube 110, or both. For example, a centerline 126 of the fourth impingement tube 162 and a centerline 128 of the fifth impingement tube 164 can be angled inward toward the centerline 120 as the fourth and fifth impingement tubes 162, 164 extend aft. In some configurations, the centerlines 122, 124, 126, 128 intersect with the centerline 120 aft of the output 114, such as in the combustion chamber 50 (FIG. 5A). The additional sets of impingement tubes 130 can be configured in the same manner as the set of impingement tubes 100. The additional sets of impingement tubes 130 can be arranged with the set of impingement tubes 100 in one or more linear rows (FIG. 5B), one or more circumferential rows disposed about the centerline 35 (see, e.g., FIG. 5C), polygonal arrangements, hexagonal arrangements, or random arrangements, among others and combinations thereof. Circular arrangements (e.g., FIG. 5C) can facilitate uniform mixing.

With further reference to FIG. 5B, the second, third, fourth, and fifth impingement tubes 112, 160-164 can be arranged about the first impingement tube 110, such as in a uniform or non-uniform arrangement. With a non-uniform arrangement, at least one of the outputs 116, 170, 172, 174 can be disposed at a different distance (e.g., a radial distance) from the centerline 120 than at least one other of the outputs 116, 170, 172, 174. The set of impingement tubes 100 can include a plurality of lean impingement tubes, which can include the second impingement tube 112 and a plurality of additional lean impingement tubes, such as the third, fourth, and fifth impingement tubes 160-164. In some examples, the second, third, fourth, and fifth impingement tubes 112, 160-164 can be arranged in an X-shaped or cross-shaped configuration with the first impingement tube 110 at the center. A ratio of lean tubes (e.g., impingement tubes 112, 160-164) to rich tubes (e.g., the first impingement tube 110) can, for example, be 0.1 to 30. The additional sets of impingement tubes 130 can be disposed in additional X-shaped configurations. Increasing the number of rich impingement tubes increases flame stability and increasing the number of lean impingement tubes reduce temperatures in the combustion chamber 50, which reduces NOₓ emissions. Sets of impingement tubes 100, 130 can be varied with greater and fewer numbers of rich and lean impingement tubes. For example, some sets of impingement tubes 100, 130 can include more rich impingement tubes (e.g., rich sets of impingement tubes) to increase flame stability and other sets of impingement tubes 100, 130 can include more lean impingement tubes (e.g., lean sets of impingement tubes) to decrease temperatures. The number lean sets of impingement tubes can be greater than the number of rich impingement tubes.

Utilizing multiple second impingement tubes 112, 160 (e.g., lean impingement tubes) impinging on the first impingement tube 110 (e.g., a rich impingement tube) facilitates rapid mixing of the first fluid 106 and the second fluid 108. The first impingement tube 110 providing the first fluid 106 (e.g., a rich fuel-air mixture) increases flame stability.

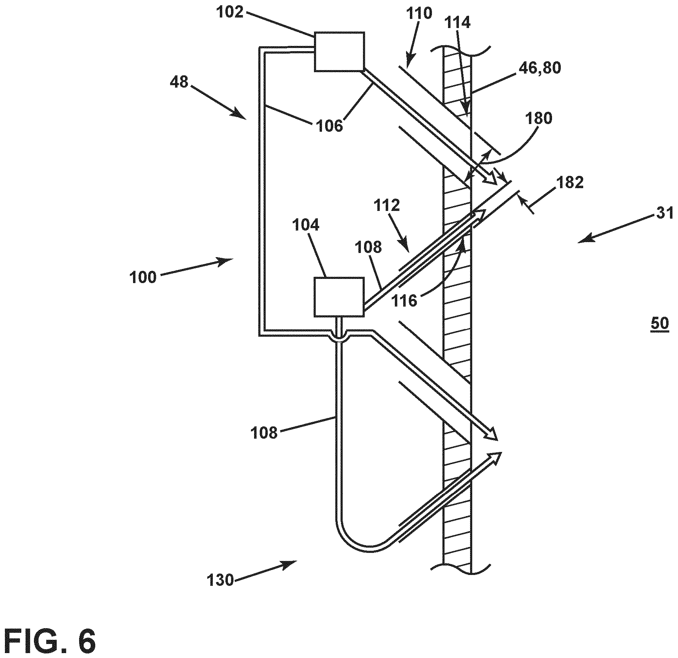

Referring to FIG. 6, diameters (e.g., hydraulic diameters) of the set of impingement tubes 100 can vary between impingement tubes. For example, the diameter 180 (e.g., the hydraulic diameter) of the first impingement tube 110 at the output 114 can be larger than the diameter 182 (e.g., the hydraulic diameter) of the second impingement tube 112 at the output 116. In some examples, the diameter 180 is at least twice as large as the diameter 182. In other configurations, the diameter 182 can be larger than the diameter 180. In some examples, the diameters 180, 182 and cross-sectional areas of the set of impingement tubes 100 can vary between upstream ends and the outputs 114, 116. For example, the area of one or more of the set of impingement tubes 100 at the upstream end can be greater than or equal to 20% and less than or equal to 1000% of the cross-sectional area at the output 114, 116.

Referring to FIGS. 7A and 7B, the wall 80 of the fuel nozzle assembly 48 can at least partially define a premixing chamber 190 disposed between the outputs 114, 116, 170 (FIG. 7B) and the combustion chamber 50. The premixing chamber 190 can fluidly couple the first impingement tube 110, the second impingement tube 112, the third impingement tube 160, or combinations thereof, with the combustion chamber 50 and can facilitate mixing of the first fluid 106 and the second fluid 108 (e.g., fuel-air mixtures) from the first, second, and third impingement tubes 110, 112, 160 (FIG. 7B) prior to the first fluid 106 and the second fluid 108 entering the combustion chamber 50. Additionally or alternatively, the premixing chamber 190 can include a converging configuration, which can increase the fluid velocity of the first fluid 106 and the second fluid 108 as they flow into the combustion chamber 50, which can avoid flashback and flameholding in the premixing chamber 190. An axial dimension of the premixing chamber 190 can be relatively short to facilitate rapid mixing of the first fluid 106 and the second fluid 108 from the set of impingement tubes 100. For example and without limitation, an axial length 191 of the premixing chamber 190 can be 0.5 inches to 0.9 inches (1.27 cm to 2.29 cm), 0.6 inches to 0.8 inches (1.52 cm to 2.03 cm), 0.7 inches (1.78 cm), or other values. The fuel nozzle assembly 48 can include a premixing chamber, such as the premixing chamber 190, for each set of impingement tubes 100, 130 (FIG. 5B), or a single premixing chamber 190 may be fluidly coupled to multiple sets of impingement tubes 100, 130. Mixing forward of the dome wall 46 and the wall 80 increases mixing between the first and second fluids 106, 108 before exiting the fuel nozzle assembly 48 into the combustion chamber 50, which can reduce the length of the combustion chamber 50.

The set of impingement tubes 100 can be disposed at one or more angles relative to a centerline 260 of the set of impingement tubes 100. For example, the first impingement tube 110 and the second impingement tube 112 can be disposed at angles 184, 186 relative to the centerline 260 (FIG. 7A). The angles 184, 186 can, for example, be greater than or equal to 0 degrees and 70 degrees, with at least one of the angles 184, 186 being greater than 0 degrees to provide impingement in the premixing chamber 190, the combustion chamber 50, or both. The angles 184, 186 may or may not be the same. In some examples, the angle 184 can be 0 degrees (e.g., parallel with the centerline 260) and the angle 186 can be greater than 0 degrees (FIG. 7B). Smaller angles 184, 186 can move the impingement zone 118 (FIG. 7A) aft, and larger angles 184, 186 can move the impingement zone 118 (FIG. 7A) forward. Impingement tubes of the set of impingements tubes 100 can be angled relative to the centerline 260 at angles that can vary from impingement tube to impingement tube.

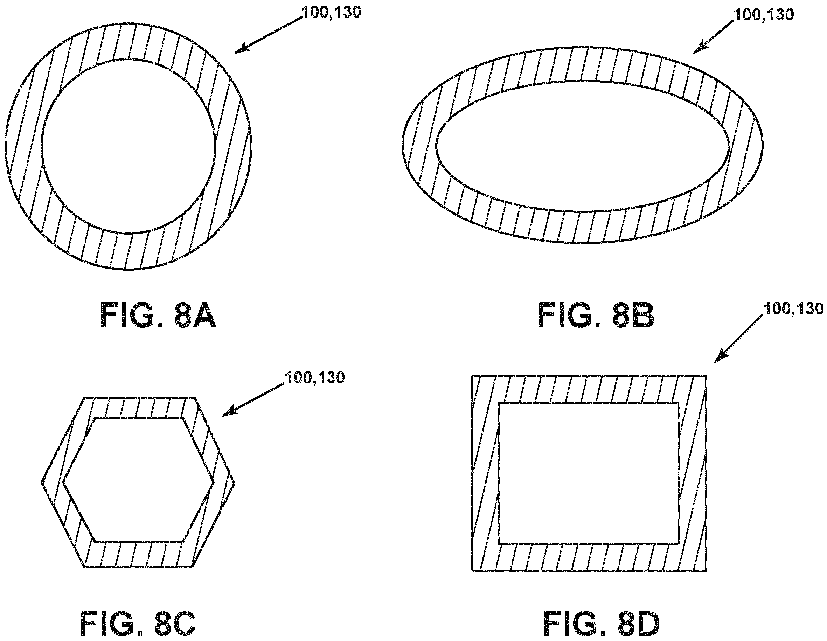

Referring to FIGS. 8A-8D, the impingement tubes of the sets of impingement tubes 100, 130 can include one or more of a variety of cross-sectional shapes (e.g. upstream of the outputs 114, 116, 144, 146 shown in FIG. 4A), which may vary along the lengths of the impingement tubes. For example, the cross-sectional shapes can include circular (FIG. 8A), elliptical (FIG. 8B), hexagonal (FIG. 8C), rectangular (FIG. 8D), other shapes, or combinations of shapes. One or more of the set of impingement tubes 100 can, in some examples, be angled at an oblique angle relative to the circumferential direction C (FIG. 4B), not perpendicular to the circumferential direction C (FIG. 4B), or both, which can provide or increase a tangential velocity of fluid flowing therethrough, such as to provide or increase swirling in the premixing chamber 190 (FIG. 7A), the combustion chamber 50 (FIG. 7A), or both.

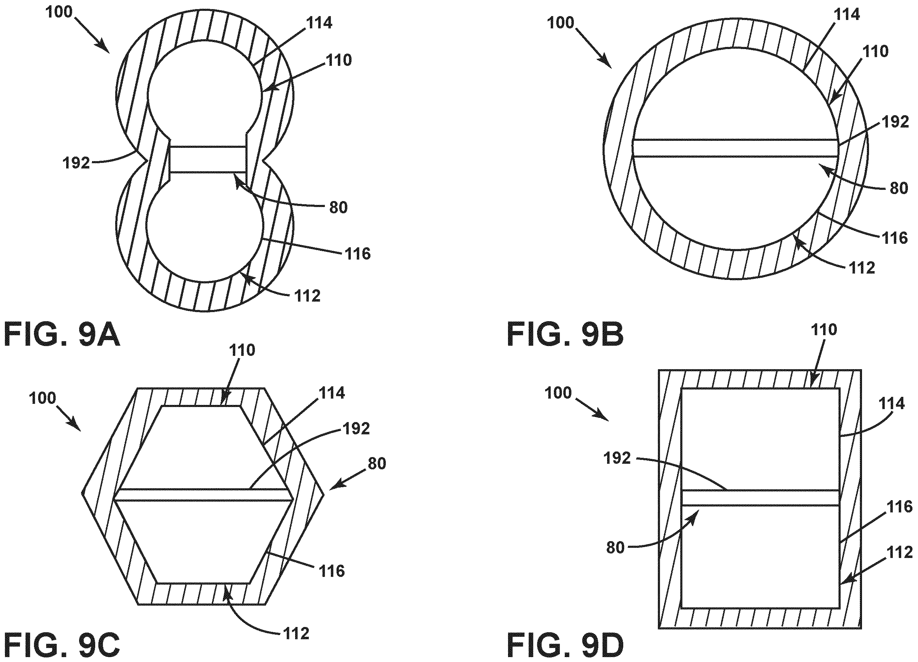

Referring to FIGS. 9A-9D, the cross-sectional shapes of the impingement tubes of the set of impingement tubes 100 at their outputs, such as outputs 114, 116, can include one or more of a variety of cross-sectional shapes. For example, the cross-sectional shapes at line A-A of FIG. 7A can include overlapping circles (FIG. 9A), semi-circles (FIG. 9B), hexagonal halves (FIG. 9C), rectangular (FIG. 9D), other shapes, or combinations thereof. The impingement tubes of the sets of impingement tubes 100 can have adjacent outputs (e.g., outputs 114, 116) and can be separated from each other such that even with overlapping cross-sectional shapes at the outputs (e.g., outputs 114, 116), at least a portion 192 of the wall 80 is disposed between respective impingement tubes. The set of impingement tubes 130 (FIG. 6) can include the same or similar cross-sectional shapes. Shapes with increased cross-sectional area and shapes that overlap increase mixing, which generates more unform temperatures and lower NOₓ emissions.

In some examples, the sets of impingement tubes 100, 130 (FIG. 5A) can include a first cross-sectional shape upstream of the outputs (e.g., outputs 114, 116, 144, 146), such as the shapes shown in FIGS. 8A-8D, and can include a second cross-sectional shape at the outputs (e.g., outputs 114, 116, 144, 146), such as the shapes shown in FIGS. 9A-9D. The first and second cross-sectional shapes can be different.

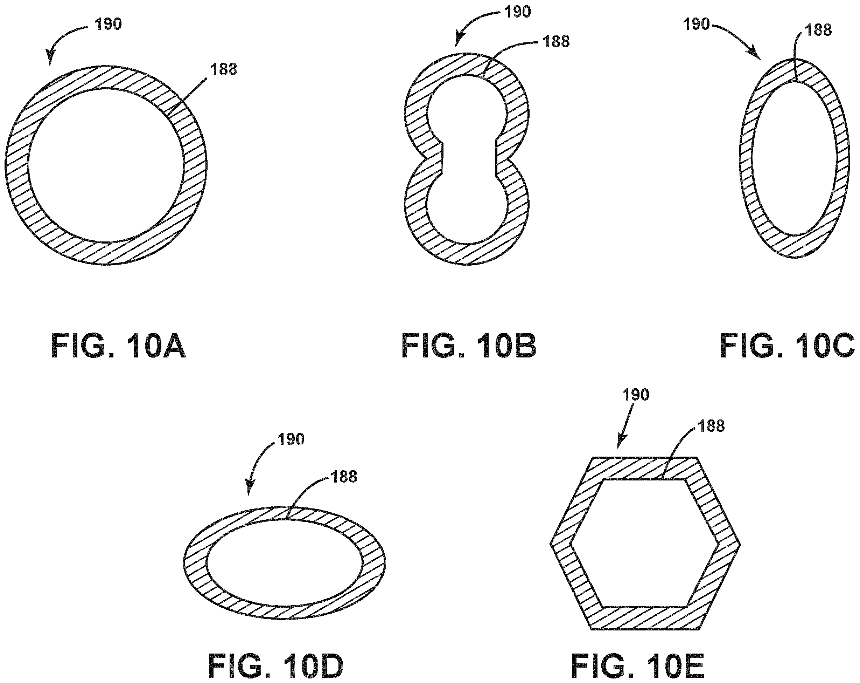

Referring to FIGS. 10A-10E, the premixing chamber 190 includes an output 188 that can include one or more of a variety of cross-sectional shapes. For example, the cross-sectional shape at line B-B of FIG. 7A can include circular (FIG. 10A), overlapping circles (FIG. 10B), elliptical (FIG. 10C), rotated elliptical (FIG. 10D), hexagonal (FIG. 10E), other shapes, or combinations of shapes. The shape may be selected to spread out fluid flow. The output 188 can be symmetrical or asymmetrical, straight or angled, can be longer in a first direction than a second direction, can be longer in the second direction that the first direction, can be angled at various angles, or combinations thereof.

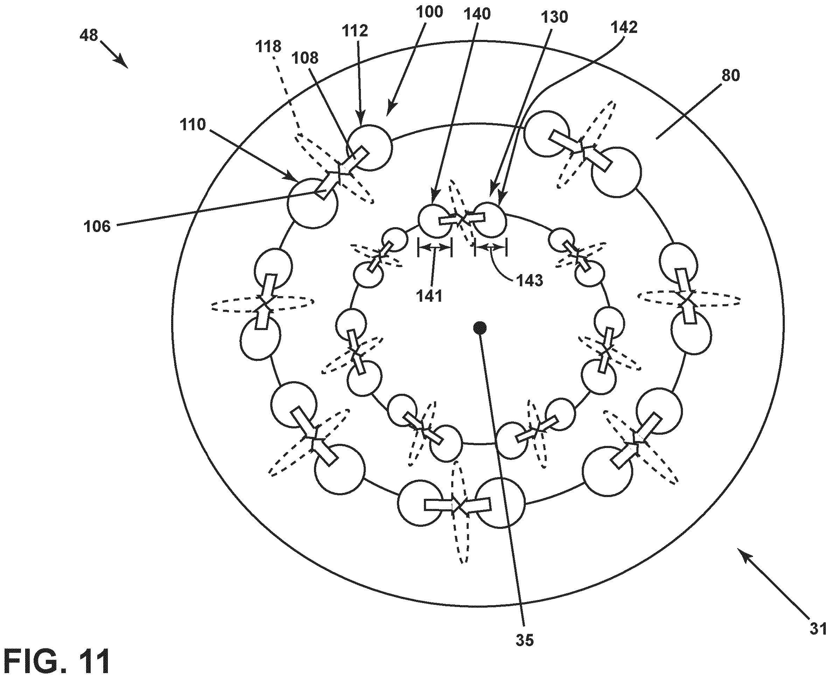

Referring to FIG. 11, the sets of impingement tubes 100, 130 can include impingement tubes that are offset from each other circumferentially relative to the centerline 35, such as the first impingement tube 110 and the second impingement tube 112. The set of impingement tubes 100 of the fuel nozzle assembly 48 can include impingement tubes that are circumferentially offset from each other, radially offset from each other, or circumferentially and radially offset from each other (relative to the centerline 35). Additionally or alternatively, the fuel nozzle assembly 48 can include the one or more additional sets of impingement tubes 130 that each include impingement tubes that are circumferentially offset from each other and from the set of impingement tubes 100. The additional sets of the one or more additional sets of impingement tubes 130 can be circumferentially offset from each other, radially offset from the set of impingement tubes 100, or both (relative to the centerline 35). Distributing the sets of impingement tubes 100, 130 relatively close together can create the impingement zones 118, 148 close together or even overlapping, which can provide more uniform mixing and lower temperatures. Diameters (e.g., hydraulic diameters) of the impingement tubes of the sets of impingement tubes 100, 130 can vary from one set of impingement tubes 100, 130 to the next, such as according to radial position (relative to the centerline 35). For example, diameters of the impingement tubes of the sets of impingement tubes closer to the centerline 35 (e.g., diameters 141, 143 of impingement tubes 140, 142) can be smaller than the diameters of the impingement tubes of the sets of impingement tubes farther from the centerline 35 (e.g., diameters 180, 182 of impingement tubes 110, 112). Impingement tubes with larger diameters provide fluid with higher momentum, which can allow the fluid to flow farther (e.g., into the combustion chamber 50, FIG. 4A) and allow for sufficient turbulence for mixing as the fluid impinges with other fluid, from tubes also including larger diameters, at greater distances from the dome wall 46 (FIG. 4A) and the wall 80. Impingement tubes with smaller diameters provide fluid with lower momentum, so fluid from such smaller tubes does not flow as far, and such tubes can be arranged to create impingement zones 118, 148 (FIG. 4A) closer to the dome wall 46 (FIG. 4A) and the wall 80 to allow for sufficient turbulence for mixing as the fluid impinges with other fluid from tubes with smaller diameters. Offsetting the larger tubes from the smaller tubes can provide more uniform mixing, lower temperatures, and lower NOₓ emissions.

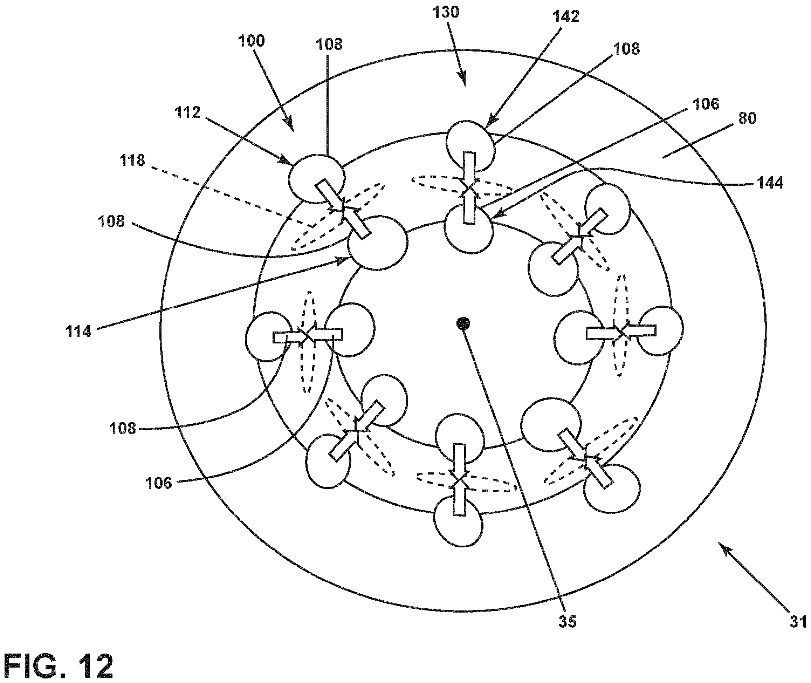

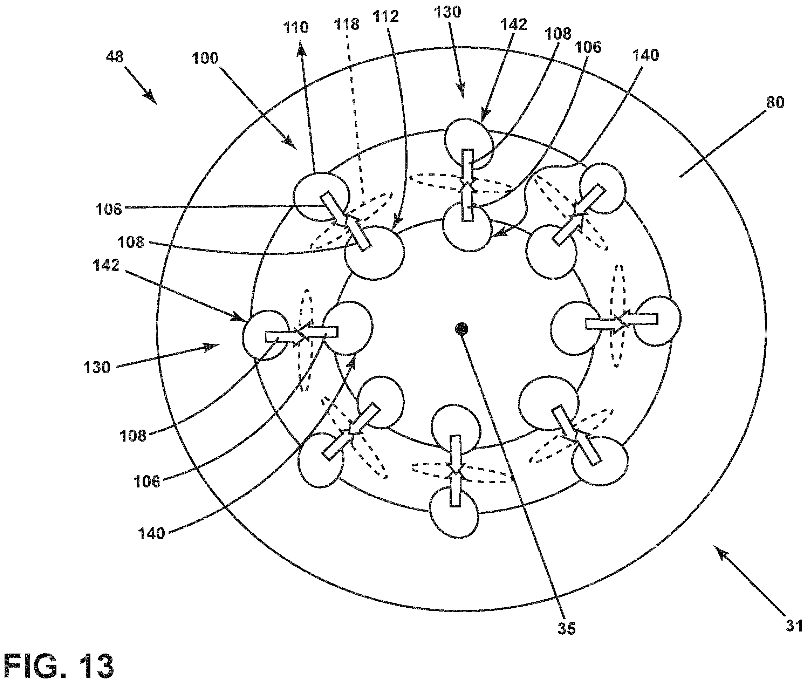

Referring to FIG. 12, the sets of impingement tubes 100, 130 can include first impingement tubes 110, 140 and second impingement tubes 112, 142 that are radially offset from the first impingement tubes 110, 140 (relative to the centerline 35). For example, the first impingement tubes 110, 140 (e.g., rich impingement tubes) can be disposed radially inward of the second impingement tubes 112, 142 (e.g., lean impingement tubes). Additionally or alternatively, the sets of impingement tubes 100, 130 can be disposed in an alternating configuration with a set having the first impingement tube 110 being radially outward of the second impingement tube 112 and an adjacent set having the first impingement tube 140 radially inward of the second impingement tube 142 (see, e.g. FIG. 13), relative to the centerline 35. An alternating configuration can provide lean impingement tubes circumferentially between rich impingement tubes and provide rich impingement tubes circumferentially between lean impingement tubes, which can provide increased flame stability and change heat release circumferentially to limit combustion dynamics.

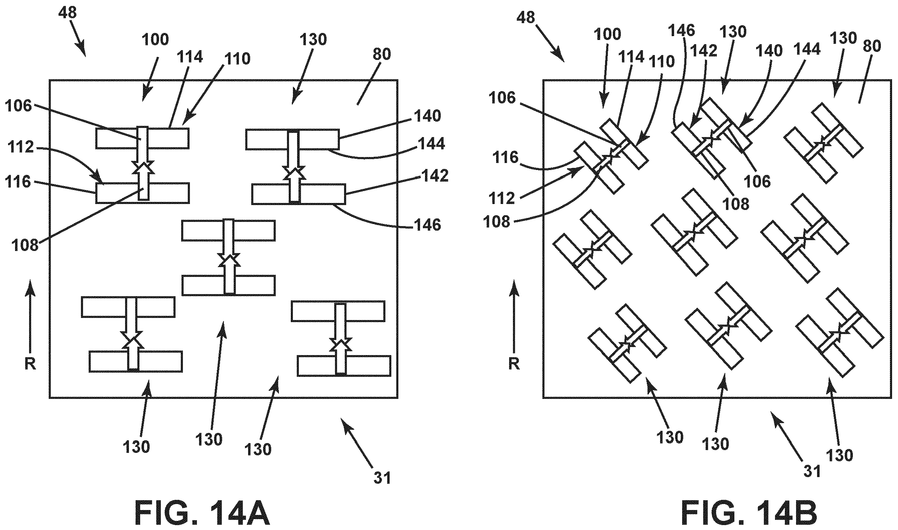

Referring to FIGS. 14A and 14B, outputs of the set of impingement tubes 100, such as the outputs 114, 116 of the first impingement tube 110 and the second impingement tube 112, can include rectangular configurations. First dimensions (e.g., widths) of the rectangular configurations can be larger (e.g., at least three times larger) than second dimensions (e.g., lengths) of the rectangular configurations. The rectangular configurations can, for example, be perpendicular to the radial direction R (FIG. 14A), relative to the centerline 33 (FIG. 2) of the combustion section 14 (FIG. 2), which can include the first dimension being measured perpendicular to the radial direction R relative to the centerline 33 (FIG. 2) and the second dimension being measured parallel to the radial direction R. The rectangular configurations can, additionally or alternatively, be angled (e.g., at an oblique or right angle) relative to the radial direction R (FIG. 14B). The one or more additional sets of impingement tubes 130 can include the same or similar configurations as the set of impingement tubes 100. For example, the outputs 144, 146 of the additional first impingement tube 140 and the additional second impingement tube 142 can be offset from each other and have rectangular configurations. The outputs 144, 146 can be parallel with the outputs 114, 116, which can include being perpendicular or angled relative to the radial direction R. The angled configuration can allow for more impingement tubes to be arranged close to each other to provide more uniform temperatures in the combustion chamber 50 (FIG. 4A).

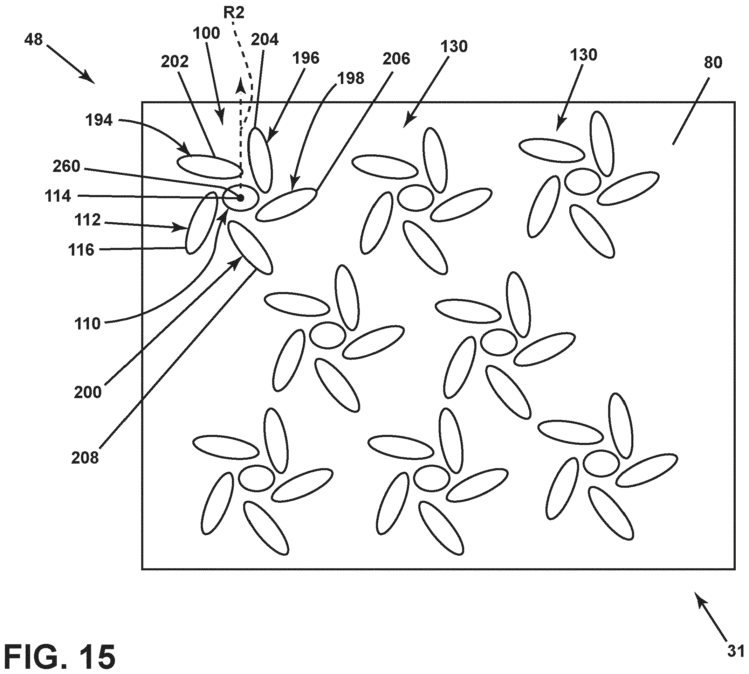

Referring to FIG. 15, the set of impingement tubes 100 can include the first impingement tube 110, the second impingement tube 112, and one or more additional second impingement tubes, such as additional second impingement tubes 194-200 having outputs 202-208. The additional second impingement tubes 194-200 can be fluidly coupled with the second fluid supply 104 (FIG. 3) to emit the second fluid 108 (FIG. 3) (e.g., a lean mixture) into the combustion chamber 50 (FIG. 3) (e.g., be configured as lean impingement tubes). The outputs 116, 202-208 of the second impingement tubes 112, 194-200 can be arranged about the output 114 of the first impingement tube 110. The output 114 can, for example, be aligned with the centerline 260 of the set of impingement tubes 100. The outputs 116, 202-208 can include elliptical configurations and can be parallel or non-parallel with a radial direction R2 relative to the centerline 260. For example, the outputs 116, 202-208 can be arranged in a spiral-like pattern about the output 114. The output 114 can be elliptical and can be elongated to a lesser extent than the outputs 116, 202-208. The elliptical configuration can spread out the first and second fluids 106, 108 as they enter the combustion chamber 50 (FIG. 4A), which can reduce regions of recirculation, low velocity, and high residence time, which can reduce NOₓ emissions.

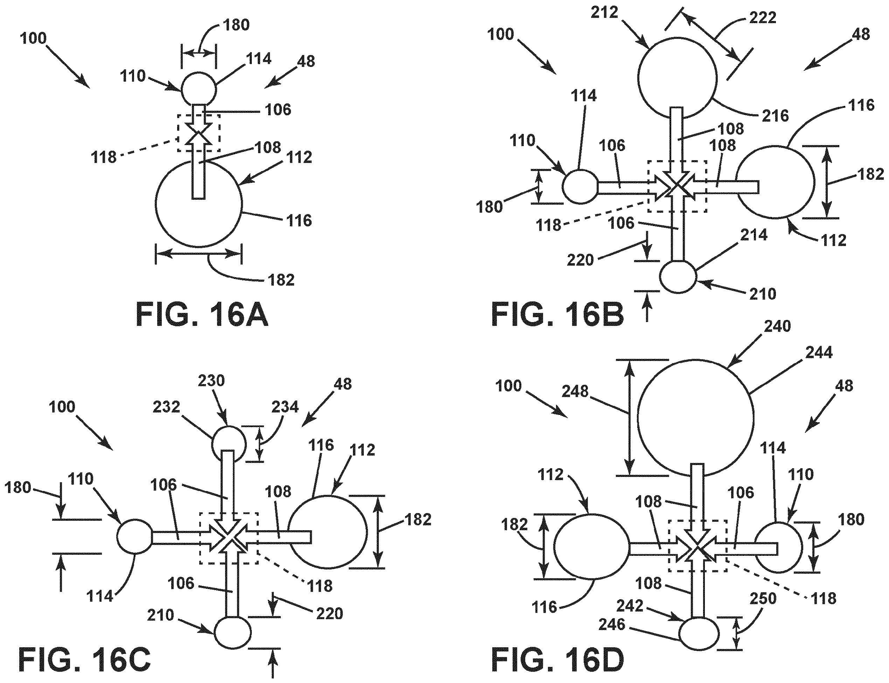

Referring to FIG. 16A, diameters (e.g., hydraulic diameters) of the sets of impingement tubes 100, 130 can be different between impingement tubes of the same set. For example, the diameter 180 of the first impingement tube 110 (e.g., at the output 114) can be smaller than the diameter 182 of the second impingement tube 112 (e.g., at the output 116). Impingement tubes with different diameters provide fluids (e.g., the first and second fluids 106, 108) with different momentum, which creates higher shear and turbulence when such fluids impinge on each other, which improves mixing of the fluids.

Referring to FIG. 16B, the set of impingement tubes 100 can include the first impingement tube 110, the second impingement tube 112, an additional first impingement tube 210, and an additional second impingement tube 212. The additional first impingement tube 210 (e.g., an additional rich impingement tube) and the additional second impingement tube 212 (e.g., an additional lean impingement tube) can be arranged in the impinging configuration with the first and second impingement tubes 110, 112 such that fluids emitted from the first impingement tubes 110, 210 and the second impingement tubes 112, 212 impinge on and mix with each other in the impingement zone 118. The additional first impingement tube 210 can be fluidly coupled with the first fluid supply 102 (FIG. 3), such as to emit the first fluid 106 (e.g., a rich mixture) into the combustion chamber 50 (FIG. 3). The additional second impingement tube 212 can be fluidly coupled with the second fluid supply 104 (FIG. 3), such as to emit the second fluid 108 (e.g., a lean mixture) into the combustion chamber 50 (FIG. 3), the premixing chamber 190 (FIG. 7A), or both. The additional first impingement tube 210 and the additional second impingement tube 212 can include additional tube outputs 214, 216, respectively, which can include respective diameters 220, 222 (e.g., hydraulic diameters). The same number of first impingement tubes 110, 210 and second impingement tubes 112, 212 can provide equal amounts of the first and second fluids 106, 108. In some examples, the diameters 182, 222 of the second impingement tubes 112, 212 can be larger than the diameters 180, 220 of the first impingement tubes 110, 210, such as to increase mixing.

Referring to FIG. 16C, the set of impingement tubes 100 of the fuel nozzle assembly 48 can include one or more additional first impingement tubes arranged in the impinging configuration with the first and second impingement tubes 110, 112 such that fluids emitted from the first and second impingement tubes 110, 112 and the one or more additional first impingement tubes impinge on and mix with each other in the impingement zone 118. For example, the set of impingement tubes 110 can include the additional first impingement tube 210 and another additional first impingement tube 230 having an output 232 with a diameter 234. The diameters 180, 220, 234 can be smaller than the diameter 182 of the second impingement tube 112. The additional first impingement tubes 210, 230 can be fluidly coupled with the first fluid supply 102 (FIG. 3) to emit the first fluid 106 into the combustion chamber 50 (FIG. 3), the premixing chamber 190 (FIG. 7A), or both. The greater number of rich impingement tubes (e.g., first impingement tubes 110, 210, 230) than lean impingement tubes (e.g., second impingement tube 112) can result in the fluid mixture from the set of impingement tubes 100 being relatively rich (e.g., a rich set of impingement tubes) to increase flame stability, reduce combustion dynamics, and improve operability.

Referring to FIG. 16D, the set of impingement tubes 100 of the fuel nozzle assembly 48 can include one or more additional second impingement tubes arranged in the impinging configuration with the first and second impingement tubes 110, 112 such that fluids emitted from the first and second impingement tubes 110, 112 and the one or more additional second impingement tubes impinge on and mix with each other in the impingement zone 118. For example, the set of impingement tubes 100 can include additional second impingement tubes 240, 242 having outputs 244, 246 with diameters 248, 250. The second impingement tubes 240, 242 can be fluidly coupled with the second fluid supply 104 (FIG. 3) such that the second impingement tubes 240, 242 emit the second fluid 108 into the combustion chamber 50 (FIG. 3), the premixing chamber 190 (FIG. 7A), or both. The greater number of lean impingement tubes (e.g., second impingement tubes 112, 212, 240, 242) than rich impingement tubes (e.g., first impingement tube 110) can result in the fluid mixture from the set of impingement tubes 100, 130 being relatively lean to decrease NOₓ emissions. In some configurations, a greater number of lean sets of impingement tubes (FIG. 16D) can be disposed about a lesser number of rich sets of impingement tubes (FIG. 16C), which can provide lower NOₓ emissions and increased flame stability, respectively.

One or both of the diameters 248, 250 can be different than the diameters 180, 182. For example, the diameters 248, 250 can be larger than the diameter 180 and smaller than the diameter 182. In some examples, one or both of the diameters 248, 250 can be the same as the diameter 180 or the diameter 182. Including impingement tubes of different diameters can provide fluid to the premixing chamber 190 (FIG. 7A), the combustion chamber 50 (FIG. 7A), or both, with different velocities, momentum, or both, which can increase turbulence and facilitate mixing. In some examples, a ratio of the momentum of the second fluid 108 emitted from the second impingement tube 112 to the momentum of the first fluid 106 emitted from the first impingement tube 110 can be greater than or equal to 1 and less than or equal to 100. For example, the first impingement tube 110 and the second impingement tube 112 can provide fluid having different momentum. A momentum flux ratio can be greater than or equal to 0.2 and less than or equal to 500.

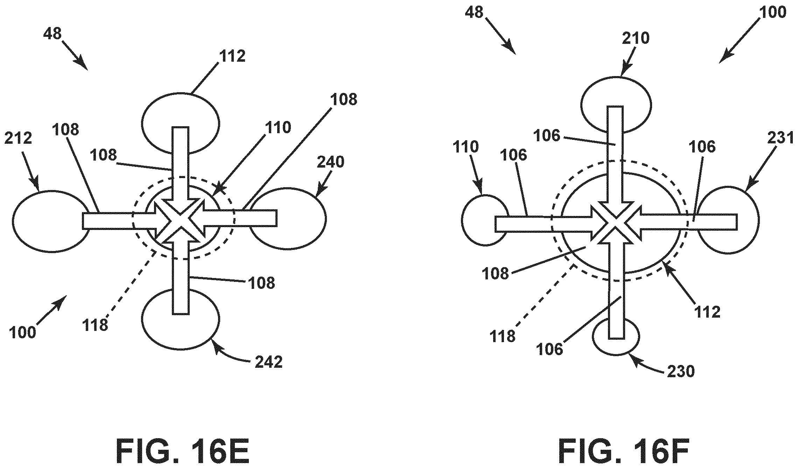

Referring to FIG. 16E, the set of impingement tubes 100 can include the first impingement tube 110 and a plurality of second impingement tubes, such as the second impingement tubes 112, 212, 240, 242, with the first impingement tube 110 at the center and the second impingement tubes 112, 212, 240, 242 disposed in the impinging configuration about the first impingement tube 110. For example, the first impingement tube 110 can emit the first fluid 106 (e.g., a rich mixture) as a central flow and the second impingement tubes 112, 212, 240, 242 can emit the second fluid 108 (e.g., a lean mixture or mixtures) radially inward toward the central flow such that the second fluid 108 impinges on the first fluid 106 in the combustion chamber 50 (FIG. 3), the premixing chamber 190 (FIG. 7A), or both (e.g., in the impingement zone 118). The second fluid 108 impinging on the first fluid 106 can increase mixing, which can decrease NOₓ emissions.

Referring to FIG. 16F, the set of impingement tubes 100 can include the second impingement tube 112 and a plurality of first impingement tubes, such as the first impingement tubes 110, 210, 230, and an additional first impingement tube 231. The additional first impingement tube 231 can be fluidly coupled with the first fluid supply 102 (FIG. 3). The second impingement tube 112 can be disposed at a center of the set of impingement tubes 100 (e.g., along the centerline 260 of the set of impingement tubes 100 - FIG. 7B), with the first impingement tubes 110, 210, 230, 231 arranged about the second impingement tube 112 in an impinging configuration. For example, the second impingement tube 112 can emit the second fluid 108 (e.g., a lean mixture) (FIG. 3) as a central flow and the first impingement tubes 110, 210, 230, 231 can emit the first fluid 106 (e.g., a rich mixture or mixtures) radially inward toward the central flow such that the first fluid 106 impinges on the second fluid 108 in the combustion chamber 50 (FIG. 3), the premixing chamber 190 (FIG. 7A), or both.

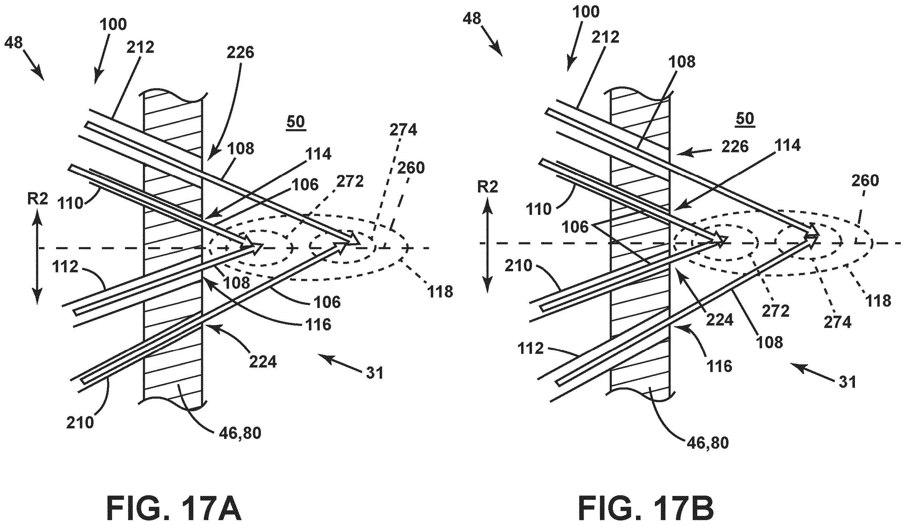

Referring to FIGS. 17A and 17B, the set of impingement tubes 100 can include the first impingement tube 110 and the second impingement tube 112, the additional first impingement tube 210, and the additional second impingement tube 212. The additional first impingement tube 210 and the additional second impingement tube 212 can be arranged in the impinging configuration with the first impingement tube 110 and the second impingement tube 112. The set of impingement tubes 100 can be arranged about the centerline 260. For example, the impingement tubes 110, 112, 210, 212 can angled radially inward toward the centerline 260 as they extend aft. Some or all of the impingement tubes 110, 112, 210, 212 can at least partially overlap in the radial direction R2 relative to the centerline 260.

In some examples, such as generally illustrated in FIG. 17A, at least portions of the additional first impingement tube 210 and the additional second impingement tube 212 can be radially outward of (e.g., at a greater radial distance from the centerline 260 than) the first impingement tube 110 and the second impingement tube 112. For example, outputs 224, 226 of the additional first impingement tube 210 and the additional second impingement tube 212 can be disposed radially outward of the outputs 114, 116. Additionally or alternatively, the impingement tubes 110, 112, 210, 212 can be disposed in an alternating configuration in the radial direction R2 relative to the centerline 260, which can include the output 114 being disposed at least partially radially between the output 226 and the centerline 260, the output 116 being disposed at least partially radially between the output 224 and the centerline 260 (e.g., opposite the outputs 114, 226), and the outputs 114, 116, 224, 226 at least partially overlapping in the radial direction R2 relative to the centerline 260.

The impinging configuration of the set of impingement tubes 100 can provide the impingement zone 118 aft of outputs of the set of impingement tubes 100, such as outputs 114, 116, 224, 226 of the impingement tubes 110, 112, 210, 212. The first impingement tube 110 and the second impingement tube 112 can be arranged such that the first fluid 106 (e.g., a rich fuel-air mixture) from the first impingement tube 110 and the second fluid 108 (e.g., a lean fuel-air mixture) from the second impingement tube 112 impinge at a first portion 272 of the impingement zone 118 (FIG. 17A). Additionally or alternatively, the additional first impingement tube 210 and the additional second impingement tube 212 can be arranged such that the first fluid 106 (e.g., the rich fuel-air mixture) emitted from the additional first impingement tube 210 and the second fluid 108 (e.g., the lean fuel-air mixture) emitted from the additional second impingement tube 212 impinge at a second portion 274 of the impingement zone 118. The second portion 274 can be aft of the first portion 272. The centerline 260 can extend through one or both of the first portion 272 and the second portion 274.

With some examples, such as generally illustrated in FIG. 17B, the outputs 114, 224 of the first impingement tubes 110, 210 can be disposed radially inward of the outputs 116, 226 of the second impingement tubes 112, 212. For example, rich impingement tubes fluidly coupled with the first fluid supply 102 (FIG. 3) can be disposed radially inward of lean impingement tubes fluidly coupled with the second fluid supply 104 (FIG. 3). With such a configuration, the first fluid 106 (e.g., rich fuel-air mixtures) from the first impingement tubes 110, 210 can impinge at the first portion 272 of the impingement zone 118, and the second fluid 108 (e.g., lean fuel-air mixtures) from the second impingement tubes 112, 212 can impinge at the second portion 274 of the impingement zone 118, aft of the first portion 272, which can improve mixing of the first fluid 106 and the second fluid 108.

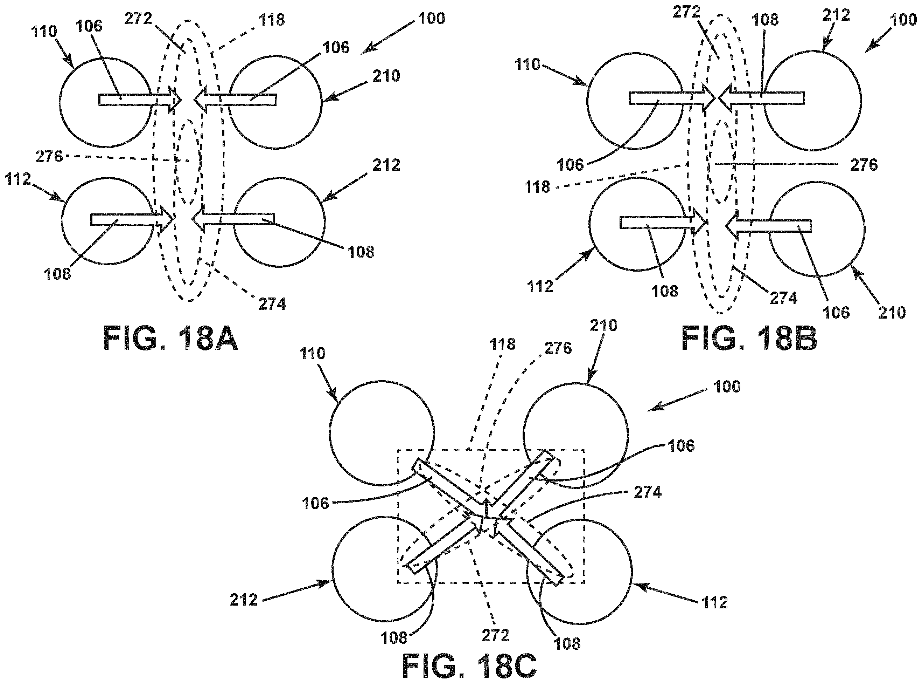

Referring to FIG. 18A, the first impingement tubes 110, 210 can be arranged to impinge at the first portion 272 of the impingement zone 118 and the second impingement tubes 112, 212 can be arranged to impinge in the second portion 274 such that the first portion 272 at least partially overlaps with the second portion 274 to define an overlapping portion 276, which can improve mixing of the first fluid 106 and the second fluid 108.

Referring to FIG. 18B, the first impingement tube 110 and the second impingement tube 112 can be arranged to impinge at the first portion 272, and the additional first impingement tube 210 and the additional second impingement tube 212 can be arranged to impinge at the second portion 274 such that the first portion 272 at least partially overlaps with the second portion 274. The first portion 272 and the second portion 274 can be partially offset radially, circumferentially, or both, relative to the centerline 33 (FIG. 2). As shown in FIG. 18C, the set of impingement tubes 100 can be arranged such that the first portion 272 and the second portion 274 of the impingement zone 118 are disposed in an X-shaped configuration.

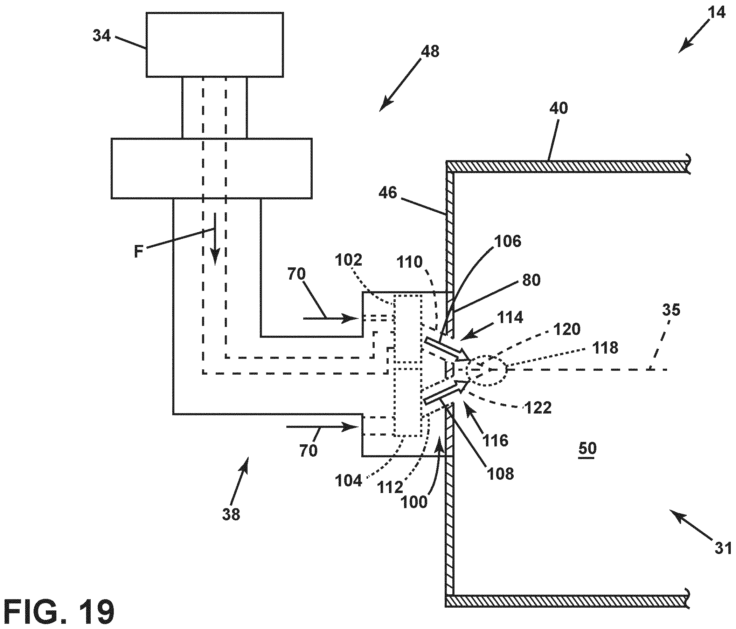

Referring to FIG. 19, the second fluid supply 104 can be configured to supply air 70 without fuel F (e.g., be configured as an air supply) to one or more impingement tubes, such as the second impingement tubes 112, 142 (FIG. 4A), 194-200 (FIG. 15), 212 (FIG. 16B), the third impingement tube 160 (FIG. 5A), the fourth impingement tube 162 (FIG. 5A), the fifth impingement tube 164 (FIG. 5A), or combinations thereof. For example, the second fluid 108 can comprise the air 70 and be devoid of fuel F. The air 70 supplied by the second fluid supply 104 can be compressed air, such as from the compressor section 12 (FIG. 1), and can be devoid of fuel F. In some examples, the second fluid supply 104 can be configured to provide the lean fuel-air mixtures and air 70 (e.g., separately). For example, the second fluid supply 104 can include a combination of the configurations shown in FIGS. 3 and 19 to provide the second fluid 108 with fuel F (e.g., lean mixtures) to one or more of the set of impingement tubes 100 and provide the second fluid 108 without fuel F (e.g., the air 70) to one or more other tubes of the set of impingement tubes 100.

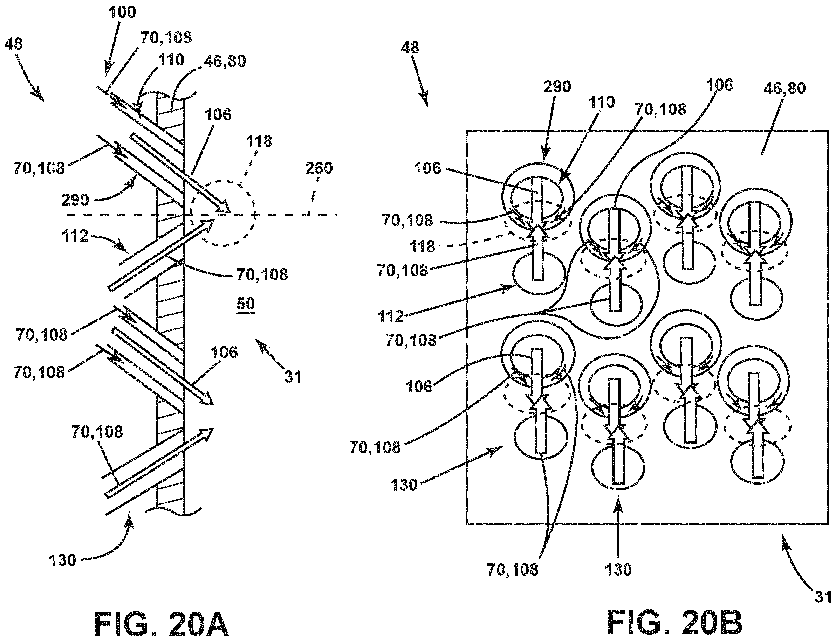

Referring to FIGS. 20A and 20B, the set of impingement tubes 100 can include the first impingement tube 110, the second impingement tube 112, and a third impingement tube 290. The first impingement tube 110 can be fluidly coupled with the first fluid supply 102 (FIG. 19). The second impingement tube 112, the third impingement tube 290, or both, can be fluidly coupled with the second fluid supply 104 (FIG. 19), and may be referred to as first and second fluid impingement tubes or first and second air impingement tubes. The first impingement tube 110, the second impingement tube 112, and the third impingement tube 290 can be arranged in the impinging configuration, which can include being angled toward the centerline 260 of the set of impingement tubes 100 as the set of impingement tubes 100 extend aft. The first impingement tube 110 can be disposed at least partially in the third impingement tube 290 and can be concentric with the third impingement tube 290. With such a configuration, the first fluid 106 emitted from the first impingement tube 110 (e.g., a rich mixture) can be surrounded, at least in part, by the second fluid 108 (e.g., air 70) from the third impingement tube 290. Providing air 70 around rich fuel-air mixtures, such as the first fluid 106, can limit high temperatures at the dome wall 46 and the wall 80, and the air 70 can facilitate flow of the rich mixture in the combustion chamber 50 away from the dome wall 46 and the wall 80.

In some examples, the same combustor 30, the same combustor portion 31, or the same fuel nozzle assembly 48 can include a combination of some or all of the different configurations of impingement tubes. For example, the same combustor 30, combustor portion 31, or fuel nozzle assembly 48 can include impingement tubes having the some or all of the configurations shown in FIGS. 4A-20B. The types of impingement tubes of the sets of impingement tubes 100, 130 are not mutually exclusive.

With some examples, impingement tubes disclosed herein can provide swirling or non-swirling flow. For example, a swirl number for the impingement tubes, which can vary between impingement tubes, can be from 0 to 0.8.

While described with respect to a turbine engine, it should be appreciated that the combustor as described herein can be for any engine having a combustor. It should be appreciated that application of aspects of the disclosure discussed herein are applicable to engines with propeller sections or fan and booster sections along with turbojets and turbo engines as well.

To the extent not already described, the different features and structures of the various embodiments can be used in combination, or in substitution with each other as desired. That one feature is not illustrated in all of the embodiments is not meant to be construed that it cannot be so illustrated but is done for brevity of description. Thus, the various features of the different embodiments can be mixed and matched as desired to form new embodiments, whether or not the new embodiments are expressly described. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects are provided by the subject matter of the following clauses:
A gas turbine engine, comprising: a core having a compressor section, combustion section, and turbine section in serial flow arrangement, with the combustion section comprising: a combustor liner that at least partially defines a combustion chamber; and a gaseous fuel nozzle assembly, comprising: a rich fuel supply to supply a rich mixture of gaseous fuel and air; a lean fuel supply to supply a lean mixture of gaseous fuel and air; a rich impingement tube fluidly coupled to the rich fuel supply to emit the rich mixture into the combustion chamber; a lean impingement tube fluidly coupled to the lean fuel supply to emit the lean mixture into the combustion chamber; and wherein the rich impingement tube and lean impingement tube are arranged in an impinging configuration.

The gas turbine engine of any preceding clause, wherein the gaseous fuel nozzle assembly includes a wall coupled with the combustion liner; and wherein the rich impingement tube and the lean impingement tube extend through the wall.

The gas turbine engine of any preceding clause, wherein the rich mixture has a first equivalence ratio that is equal to or greater than 4.

The gas turbine engine of any preceding clause, wherein the lean mixture has a second equivalence ratio that is equal to less than 0.4.

The gas turbine engine of any preceding clause, wherein the lean impingement tube is a first lean impingement tube, and wherein the gaseous fuel nozzle assembly includes a second lean impingement tube fluidly coupled to the lean fuel supply to emit the lean mixture into the combustion chamber.

The gas turbine engine of any preceding clause, wherein the rich impingement tube is disposed at least partially radially between the lean impingement tube and the second lean impingement tube.

The gas turbine engine of any preceding clause, wherein the gaseous fuel nozzle assembly includes a plurality of additional lean impingement tubes arranged with the lean impingement tube about the rich impingement tube.

The gas turbine engine of any preceding clause, wherein a lean impingement tube output of the lean impingement tube is disposed at a different radial distance from a rich impingement tube centerline than an additional lean impingement tube output of at least one of the plurality of additional lean impingement tubes.

The gas turbine engine of any preceding clause, wherein the rich impingement tube has a greater hydraulic diameter than the lean impingement tube.

The gas turbine engine of any preceding clause, wherein the rich mixture to be emitted by the rich impingement tube and the lean mixture to be emitted by the lean impingement tube have different momentum.

The gas turbine engine of any preceding clause, wherein a ratio of a momentum of the lean mixture emitted by the lean impingement tube to a momentum of the rich mixture emitted by the rich impingement tube is greater than 1 and less than or equal to 100.

The gas turbine engine of any preceding clause, wherein the gaseous fuel nozzle assembly comprises a set of impingement tubes including the rich impingement tube and the lean impingement tube, the set of impingement tubes including a centerline; the rich impingement tube is disposed at a first angle relative to the centerline; the lean impingement tube is disposed at a second angle relative to the centerline; the first angle is greater than or equal to 0 degrees and less than or equal to 70 degrees; the second angle is greater than or equal to 0 degrees and less than or equal to 70 degrees; and at least one of the first angle or the second angle is greater than 0 degrees.

The gas turbine engine of any preceding clause, wherein outputs of the rich impingement tube and the lean impingement tube are offset by a center-to-center distance greater than or equal to a diameter of the rich impingement tube and less than or equal to 20 times the diameter of the rich impingement tube.

The gas turbine engine of any preceding clause, wherein outputs of the rich impingement tube and the lean impingement tube are offset by a center-to-center distance greater than or equal to a diameter of the lean impingement tube and less than or equal to 20 times the diameter of the lean impingement tube.

The gas turbine engine of any preceding clause, wherein the rich impingement tube is circumferentially offset from the lean impingement tube relative to a centerline of the combustion section.

The gas turbine engine of any preceding clause, wherein the gaseous fuel nozzle assembly includes three additional lean impingement tubes arranged with the rich impingement tube and the lean impingement tube in an X-shaped configuration.

The gas turbine engine of any preceding clause, wherein the rich impingement tube is overlaps with a center of the X-shaped configuration.

The gas turbine engine of any preceding clause, wherein the gaseous fuel nozzle assembly includes a first set of impingement tubes including the rich impingement tube, the lean impingement tube, and the three additional lean impingement tubes; and wherein the gaseous fuel nozzle assembly includes a plurality of additional sets of impingement tubes disposed in additional X-shaped configurations.

The gas turbine engine of any preceding clause, wherein the plurality of additional sets of impingement tubes includes a first additional set circumferentially offset from the first set and a second additional set radially offset from the first set and the first additional set.

The gas turbine engine of any preceding clause, wherein the gaseous fuel nozzle assembly includes a wall coupled with the combustion liner and at least partially defining a premixing chamber; and wherein premixing chamber fluidly couples the rich impingement tube and the lean impingement tube with the combustion chamber.

The gas turbine engine of any preceding clause, wherein a cross-sectional shape of a premixing chamber output of the premixing chamber is circular, elliptical, hexagonal, or overlapping circles.

The gas turbine engine of any preceding clause, wherein the rich impingement tube includes a rich impingement tube output and a first cross-sectional shape upstream of the rich impingement tube output; and wherein the first cross-sectional shape is circular, elliptical, hexagonal, or rectangular.

The gas turbine engine of any preceding clause, wherein the rich impingement tube includes a second cross-sectional shape at the rich impingement tube output that is different than the first cross-sectional shape.

The gas turbine engine of any preceding clause, wherein the lean impingement tube includes a lean impingement tube output adjacent the rich impingement tube output.

The gas turbine engine of any preceding clause, wherein the rich impingement tube and the lean impingement tube are circumferentially offset, radially offset, or circumferentially and radially offset from each other relative to a centerline of the gaseous fuel nozzle assembly.

The gas turbine engine of any preceding clause, wherein the gaseous fuel nozzle assembly includes a second rich impingement tube and a second lean impingement tube arranged in a second impinging configuration with each other; and
wherein the second rich impingement tube and the second lean impingement tube are circumferentially offset, radially offset, or circumferentially and radially offset from the rich impingement tube and the lean impingement tube.

The gas turbine engine of any preceding clause, wherein the second rich impingement tube and the second lean impingement tube are disposed radially inward of the rich impingement tube and the lean impingement tube.

The gas turbine engine of any preceding clause, wherein the second rich impingement tube and the second lean impingement tube have smaller hydraulic diameters than the rich impingement tube and the lean impingement tube.

The gas turbine engine of any preceding clause, wherein the second rich impingement tube and the second lean impingement tube are circumferentially offset from the rich impingement tube and the lean impingement tube; wherein the rich impingement tube and the second lean impingement tube are disposed at a first distance from the centerline of the gaseous fuel nozzle assembly; and wherein the lean impingement tube and the second rich impingement tube are disposed at a second distance from the centerline of the gaseous fuel nozzle assembly that is different than the first distance.

The gas turbine engine of any preceding clause, wherein the gaseous fuel nozzle assembly includes a plurality of additional rich and lean impingement tubes arranged in an alternating configuration.

The gas turbine engine of any preceding clause, wherein the alternating configuration includes additional rich and lean impingement tubes of adjacent pairs of the plurality of additional rich and lean impingement tubes being disposed at alternating distances from a centerline of the gaseous fuel nozzle assembly.

The gas turbine engine of any preceding clause, wherein outputs of the rich impingement tube and the lean impingement tube include rectangular configurations.

The gas turbine engine of any preceding clause, wherein first dimensions of the rectangular configurations are at least three times longer than second dimensions of the rectangular configurations.

The gas turbine engine of any preceding clause, wherein the gaseous fuel nozzle assembly includes a first set of impingement tubes including the rich impingement tube and the lean impingement tube; and wherein the gaseous fuel nozzle assembly includes a plurality of additional sets of impingement tubes having offset from the first set and having rectangular additional tube outputs.

The gas turbine engine of any preceding clause, wherein the outputs of the first set of impingement tubes are perpendicular to a radial direction relative to a centerline of the combustion section.

The gas turbine engine of any preceding clause, wherein the rectangular additional tube outputs are parallel with the outputs of the first set of impingement tubes.

The gas turbine engine of any preceding clause, wherein the outputs of the first set of impingement tubes are disposed at an oblique angle relative to a centerline of the combustion section.

The gas turbine engine of any preceding clause, wherein the rectangular additional tube outputs are parallel with the outputs of the first set of impingement tubes.

The gas turbine engine of any preceding clause, wherein the gaseous fuel nozzle assembly includes a plurality of additional lean impingement tubes; and wherein the lean impingement tube and the plurality of additional lean impingement tubes arranged about the rich impingement tube.

The gas turbine engine of any preceding clause, wherein lean tube outputs of the lean impingement tube and the plurality of additional lean impingement tubes include elliptical configurations.

The gas turbine engine of any preceding clause, wherein the lean tube outputs are non-parallel with a radial direction relative to a centerline of the rich impingement tube.

The gas turbine engine of any preceding clause, wherein a lean tube output of the lean impingement tube has a larger hydraulic diameter than a rich tube output of the rich impingement tube.

The gas turbine engine of any preceding clause, wherein the gaseous fuel comprises hydrogen.

The gas turbine engine of any preceding clause, wherein the gaseous fuel is hydrogen gas.

The gas turbine engine of any preceding clause, wherein the gaseous fuel nozzle assembly includes a second rich impingement tube and second lean impingement tube that are arranged in the impinging configuration with the rich impingement tube and the lean impingement tube.

The gas turbine engine of any preceding clause, wherein a second lean tube output of the second lean impingement tube has a larger hydraulic diameter than the rich tube output and a second rich tube output of the second rich impingement tube.

The gas turbine engine of any preceding clause, wherein the gaseous fuel nozzle assembly includes one or more additional rich impingement tubes arranged in the impinging configuration with the rich impingement tube and the lean impingement tube.

The gas turbine engine of any preceding clause, wherein hydraulic diameters of rich tube outputs of the rich impingement tube and the one or more additional rich impingement tubes are smaller than a hydraulic diameter of the lean impingement tube.

The gas turbine engine of any preceding clause, wherein the gaseous fuel nozzle assembly includes a set of additional lean impingement tubes having additional lean impingement tube output hydraulic diameters that are different than a hydraulic diameter of a lean tube output of the lean impingement tube and greater than a rich tube output hydraulic diameter of a rich tube output of the rich impingement tube; and wherein the set of additional lean impingement tubes are arranged in the impinging configuration with the rich impingement tube and the lean impingement tube.

The gas turbine engine of any preceding clause, wherein the gaseous fuel nozzle assembly includes a set of impingement tubes including the rich impingement tube, the lean impingement tube, a second rich impingement tube, and second lean impingement tube that are arranged in the impinging configuration.

The gas turbine engine of any preceding clause, wherein at least portions of the second rich impingement tube and the second lean impingement tube are disposed radially outward of the rich impingement tube and the lean impingement tube relative to a centerline of a portion of the gaseous fuel nozzle assembly.

The gas turbine engine of any preceding clause, wherein the rich impingement tube, the lean impingement tube, the second rich impingement tube, and the second rich impingement tube at least partially overlap in a radial direction relative to a centerline of the set of impingement tubes.

The gas turbine engine of any preceding clause, wherein the rich impingement tube, the lean impingement tube, the second rich impingement tube, and the second rich impingement tube are disposed in an alternating configuration in the radial direction.

The gas turbine engine of any preceding clause, wherein the lean impingement tube is disposed at least partially radially outward of the rich impingement tube; and wherein the second lean impingement tube is disposed at least partially radially outward of the lean impingement tube.

The gas turbine engine of any preceding clause, wherein the impinging configuration provides an impingement zone aft of outputs to the rich impingement tube, the lean impingement tube, the second rich impingement tube, and the second rich impingement tube.

The gas turbine engine of any preceding clause, wherein the rich impingement tube and the lean impingement tube are arranged such that the rich mixture and the lean mixture impinge at a first portion of the impingement zone; wherein the second rich impingement tube emits a second rich mixture; wherein the second lean impingement tube emits a second lean mixture; and wherein the second rich impingement tube and the second lean impingement tube are arranged such that the second rich mixture and the second lean mixture impinge at a second portion of the impingement zone.

The gas turbine engine of any preceding clause, wherein the second portion of the impingement zone is aft of the first portion of the impingement zone.

The gas turbine engine of any preceding clause, wherein the impingement zone is disposed at least partially in a premixing chamber provided by the gaseous fuel nozzle assembly, at least partially in the combustion chamber, or both.

The gas turbine engine of any preceding clause, wherein the first portion of the impingement zone at least partially overlaps with the second portion of the impingement zone.

The gas turbine engine of any preceding clause, wherein the first portion and the second portion of the impingement zone are partially offset radially, circumferentially, or both, relative to a centerline of the combustion section.

The gas turbine engine of any preceding clause, wherein the first portion and the second portion are disposed in an X-shaped configuration.

The gas turbine engine of any preceding clause, wherein the second rich impingement tube emits the rich mixture; wherein the second lean impingement tube emits the lean mixture; wherein the rich impingement tube and the second rich impingement tube are arranged such that the rich mixture from the rich impingement tube and the rich mixture from the second rich impingement tube impinge at a first portion of the impingement zone; and wherein the lean impingement tube and the second lean impingement tube are arranged such that the lean mixture from the lean impingement tube and the lean mixture from the second lean impingement tube impinge at a second portion of the impingement zone.

The gas turbine engine of any preceding clause, wherein the second portion of the impingement zone is aft of the first portion of the impingement zone.

The gas turbine engine of any preceding clause, wherein the impingement zone is disposed at least partially in a premixing chamber provided by the gaseous fuel nozzle assembly, at least partially in the combustion chamber, or both.

The gas turbine engine of any preceding clause, wherein the first portion of the impingement zone at least partially overlaps with the second portion of the impingement zone.

The gas turbine engine of any preceding clause, wherein the first portion and the second portion of the impingement zone are partially offset radially, circumferentially, or both, relative to a centerline of a portion of the fuel nozzle assembly.

A gas turbine engine, comprising: a core having a compressor section, combustion section, and turbine section in serial flow arrangement, with the combustion section comprising: a combustion liner that at least partially defines a combustion chamber; and a gaseous fuel nozzle assembly, comprising: a rich fuel supply to supply a rich mixture of gaseous fuel and air; a fluid supply to supply a fluid; a rich impingement tube fluidly coupled to the rich fuel supply to emit the rich mixture into the combustion chamber; a fluid impingement tube fluidly coupled to the fluid supply to emit the fluid into the combustion chamber; and wherein the rich impingement tube and the fluid impingement tube are arranged in an impinging configuration.

The gas turbine engine of any preceding clause, wherein the fluid supplied by the fluid supply is compressed air.

The gas turbine engine of any preceding clause, wherein the fluid supplied by the fluid supply is devoid of fuel.

The gas turbine engine of any preceding clause, wherein the fluid supplied by the fluid supply is a lean mixture of gaseous fuel and air.

The gas turbine engine of any preceding clause, wherein the rich mixture has a first fuel-air mixture ratio that is equal to or greater than 4.

The gas turbine engine of any preceding clause, wherein the gaseous fuel nozzle assembly includes a second fluid impingement tube arranged in the impinging configuration with the rich impingement tube and the fluid impingement tube.

The gas turbine engine of any preceding clause, wherein the rich impingement tube is disposed at least partially in the second fluid impingement tube.

The gas turbine engine of any preceding clause, wherein the second fluid impingement tube is fluidly coupled with the fluid supply.

The gas turbine engine of any preceding clause, wherein the gaseous fuel nozzle assembly includes a wall coupled with the combustion liner; and wherein the rich impingement tube, the fluid impingement tube, and the second fluid impingement tube extend at least partially through the wall.

A method of operating the gas turbine engine of any preceding clause, the method comprising: providing the rich fuel-air mixture to the rich impingement tube; providing the lean fuel-air mixture to the lean impingement tube such that the rich fuel-air mixture and the lean fuel-air mixture impinge in the combustion chamber; and mixing the rich fuel-air mixture with the lean fuel-air mixture in the combustion chamber.

A method of operating a gas turbine engine including a core having a compressor section, a combustion section, and a turbine section in serial flow arrangement, the combustion section including a combustor liner at least partially defining a combustion chamber and including a gaseous fuel nozzle assembly having a rich impingement tube and a lean impingement tube disposed in an impinging configuration, the method comprising: providing a rich fuel-air mixture to the rich impingement tube; providing a lean fuel-air mixture to the lean impingement tube; and mixing the rich fuel-air mixture with the lean fuel-air mixture in at least one of the combustion chamber or a premixing chamber of the gaseous fuel nozzle assembly.

The method of any preceding clause, wherein the rich fuel-air mixture has a first equivalence ratio that is equal to or greater than 4 and less than or equal to 10.

The method of any preceding clause, wherein the lean fuel-air mixture has a second equivalence ratio that is greater than 0 and less than or equal to 0.4.

The method of any preceding clause, wherein the gaseous fuel nozzle assembly includes an additional impingement tube arranged in the impinging configuration with the rich impingement tube and the lean impingement tube.

The method of any preceding clause, wherein the rich impingement tube is disposed at least partially in the additional impingement tube.

The gas turbine engine of any preceding clause, wherein the additionally impingement tube is fluidly coupled with a source of air.

The method of any preceding clause, wherein the gaseous fuel nozzle assembly includes a wall coupled with the combustion liner; and wherein the rich impingement tube, the lean impingement tube, and the additional impingement tube extend at least partially through the wall.

A gaseous fuel nozzle assembly for a gas turbine engine, comprising: a rich fuel supply to supply a rich mixture of gaseous fuel and air; a lean fuel supply to supply a lean mixture of gaseous fuel and air; a rich impingement tube fluidly coupled to the rich fuel supply to emit the rich mixture; a lean impingement tube fluidly coupled to the lean fuel supply to emit the lean mixture; and wherein the rich impingement tube and lean impingement tube are arranged in an impinging configuration.

The gaseous fuel nozzle assembly of any preceding clause, wherein the gaseous fuel nozzle assembly includes a wall; and wherein the rich impingement tube and the lean impingement tube extend through the wall.

The gaseous fuel nozzle assembly of any preceding clause, wherein the rich mixture has a first equivalence ratio that is equal to or greater than 4.

The gaseous fuel nozzle assembly of any preceding clause, wherein the lean mixture has a second equivalence ratio that is equal to less than 0.4.

The gaseous fuel nozzle assembly of any preceding clause, further comprising a second lean impingement tube fluidly coupled to the lean fuel supply to emit the lean mixture.

The gaseous fuel nozzle assembly of any preceding clause, wherein the rich impingement tube is disposed at least partially radially between the lean impingement tube and the second lean impingement tube.

The gaseous fuel nozzle assembly of any preceding clause, further comprising a plurality of additional lean impingement tubes arranged with the lean impingement tube about the rich impingement tube.

A gas turbine engine, comprising: a compressor section, combustion section, and turbine section in serial flow arrangement, with the combustion section comprising: a combustor liner that at least partially defines a combustion chamber; and a gaseous fuel nozzle assembly, comprising: a rich fuel supply to supply a rich mixture of gaseous fuel and air; a lean fuel supply to supply a lean mixture of gaseous fuel and air that is leaner than the rich mixture of gaseous fuel and air; a rich impingement tube fluidly coupled to the rich fuel supply to emit the rich mixture into the combustion chamber; a lean impingement tube fluidly coupled to the lean fuel supply to emit the lean mixture into the combustion chamber; and wherein the rich impingement tube and lean impingement tube are arranged in an impinging configuration.

The gas turbine engine of any preceding clause, wherein the gaseous fuel nozzle assembly includes a wall coupled with the combustion liner; and wherein the rich impingement tube and the lean impingement tube extend through the wall.

The gas turbine engine of any preceding clause, wherein the rich mixture has a first equivalence ratio that is equal to or greater than 4.

The gas turbine engine of any preceding clause, wherein the lean mixture has a second equivalence ratio that is equal to less than 0.4.

The gas turbine engine of any preceding clause, wherein the lean impingement tubes is a first lean impingement tube, and wherein the gaseous fuel nozzle assembly includes a second lean impingement tube fluidly coupled to the lean fuel supply to emit the lean mixture into the combustion chamber.

The gas turbine engine of any preceding clause, wherein the rich impingement tube is disposed at least partially radially between the first lean impingement tube and the second lean impingement tube.

The gas turbine engine of any preceding clause, wherein the gaseous fuel nozzle assembly includes a plurality of additional lean impingement tubes arranged with the lean impingement tube about the rich impingement tube.

The gas turbine engine of any preceding clause, wherein the rich impingement tube has a greater hydraulic diameter than the lean impingement tube.

The gas turbine engine of any preceding clause, wherein the rich mixture to be emitted by the rich impingement tube and the lean mixture to be emitted by the lean impingement tube have different momentum.

The gas turbine engine of any preceding clause, wherein the gaseous fuel nozzle assembly comprises a set of impingement tubes including the rich impingement tube and the lean impingement tube, the set of impingement tubes including a centerline; the rich impingement tube is disposed at a first angle relative to the centerline; the lean impingement tube is disposed at a second angle relative to the centerline; the first angle is greater than or equal to 0 degrees and less than or equal to 70 degrees; the second angle is greater than or equal to 0 degrees and less than or equal to 70 degrees; and at least one of the first angle or the second angle is greater than 0 degrees.

The gas turbine engine of any preceding clause, wherein outputs of the rich impingement tube and the lean impingement tube are offset by a center-to-center distance greater than or equal to a diameter of the rich impingement tube and less than or equal to 20 times the diameter of the rich impingement tube.

The gas turbine engine of any preceding clause, wherein outputs of the rich impingement tube and the lean impingement tube are offset by a center-to-center distance greater than or equal to a diameter of the lean impingement tube and less than or equal to 20 times the diameter of the lean impingement tube.

The gas turbine engine of any preceding clause, wherein the rich impingement tube is circumferentially offset from the lean impingement tube relative to a centerline of the combustion section.

The gas turbine engine of any preceding clause, wherein the gaseous fuel nozzle assembly includes three additional lean impingement tubes arranged with the rich impingement tube and the lean impingement tube in an X-shaped configuration.

The gas turbine engine of any preceding clause, wherein the gaseous fuel nozzle assembly includes a first set of impingement tubes including the rich impingement tube, the lean impingement tube, and the three additional lean impingement tubes; and wherein the gaseous fuel nozzle assembly includes a plurality of additional sets of impingement tubes disposed in additional X-shaped configurations.

The gas turbine engine of any preceding clause, wherein the plurality of additional sets of impingement tubes includes a first additional set of impingement tubes circumferentially offset from the first set of impingement tubes and a second additional set of impingement tubes radially offset from the first set of impingement tubes and the first additional set of impingement tubes.

The gas turbine engine of any preceding clause, wherein the gaseous fuel comprises hydrogen.

The gas turbine engine of any preceding clause, wherein the gaseous fuel nozzle assembly includes a second rich impingement tube and second lean impingement tube that are arranged in the impinging configuration with the rich impingement tube and the lean impingement tube.

The gas turbine engine of any preceding clause, wherein a second lean tube output of the second lean impingement tube has a larger hydraulic diameter than the rich tube output and a second rich tube output of the second rich impingement tube.

The gas turbine engine of any preceding clause, wherein the gaseous fuel nozzle assembly includes one or more additional rich impingement tubes arranged in the impinging configuration with the rich impingement tube and the lean impingement tube.

## Claims

1. A gas turbine engine (10), comprising:
a compressor section (12), combustion section (14), and turbine section (16) in a serial flow arrangement, with the combustion section (14) comprising:
a combustor liner (40) that at least partially defines a combustion chamber (50); and
a gaseous fuel nozzle assembly (48), comprising:
a rich fuel supply (102) to supply a rich mixture (106) of gaseous fuel (F) and air (70);
a lean fuel supply (104) to supply a lean mixture (108) of gaseous fuel (F) and air (70) that is leaner than the rich mixture (106);
a rich impingement tube (110) fluidly coupled to the rich fuel supply (102) to emit the rich mixture (106) into the combustion chamber (50);
a lean impingement tube (112) fluidly coupled to the lean fuel supply (104) to emit the lean mixture (108) into the combustion chamber (50); and
wherein the rich impingement tube (110) and lean impingement tube (112) are arranged in an impinging configuration.

2. The gas turbine engine (10) of claim 1, wherein the gaseous fuel nozzle assembly (48) includes a wall (80) coupled with the combustor liner (40); and
wherein the rich impingement tube (110) and the lean impingement tube (112) extend through the wall (80).

3. The gas turbine engine (10) of any preceding claim, wherein the rich mixture (106) has a first equivalence ratio that is equal to or greater than 4.

4. The gas turbine engine (10) of claim 3, wherein the lean mixture (108) has a second equivalence ratio that is equal to less than 0.4.

5. The gas turbine engine (10) of any preceding claim, wherein the lean impingement tube (112) is a first lean impingement tube, and wherein the gaseous fuel nozzle assembly (48) includes a second lean impingement tube (142, 162, 164,194, 196, 198, 200, 212, 240, 242) fluidly coupled to the lean fuel supply (104) to emit the lean mixture (108) into the combustion chamber (50).

6. The gas turbine engine (10) of claim 5, wherein the rich impingement tube (110) is disposed at least partially radially between the first lean impingement tube (112) and the second lean impingement tube (142, 162, 164 194, 196, 198, 200, 212, 240, 242).

7. The gas turbine engine (10) of any preceding claim, wherein the gaseous fuel nozzle assembly (48) includes a plurality of additional lean impingement tubes (142, 162, 164 194, 196, 198, 200, 212, 240, 242) arranged with the lean impingement tube (112) about the rich impingement tube (110).

8. The gas turbine engine (10) of any preceding claim, wherein the gaseous fuel (F) comprises hydrogen.

9. The gas turbine engine (10) of any preceding claim, wherein the rich mixture (106) to be emitted by the rich impingement tube (110) and the lean mixture (108) to be emitted by the lean impingement tube (112) have different momentum.

10. The gas turbine engine (10) of any preceding claim, wherein the gaseous fuel nozzle assembly (48) comprises a set of impingement tubes (100, 130) including the rich impingement tube (110) and the lean impingement tube (112), the set of impingement tubes (100, 130) including a centerline (260);
the rich impingement tube is disposed at a first angle (184) relative to the centerline (260);
the lean impingement tube (112) is disposed at a second angle (186) relative to the centerline (260);
the first angle (184) is greater than or equal to 0 degrees and less than or equal to 70 degrees;
the second angle (186) is greater than or equal to 0 degrees and less than or equal to 70 degrees; and
at least one of the first angle (184) or the second angle (186) is greater than 0 degrees.

11. The gas turbine engine (10) of any preceding claim, wherein outputs of the rich impingement tube and the lean impingement tube are offset by a center-to-center distance (154) (156) greater than or equal to a diameter (180, 182) of the rich impingement tube and less than or equal to 20 times the diameter (180, 182) of the rich impingement tube.

12. The gas turbine engine (10) of any preceding claim, wherein outputs (114, 116) of the rich impingement tube (110) and the lean impingement tube (112) are offset by a center-to-center distance (156) greater than or equal to a diameter (182) of the lean impingement tube (112) and less than or equal to 20 times the diameter (182) of the lean impingement tube (112).

13. The gas turbine engine (10) of any preceding claim, wherein the rich impingement tube (110) is circumferentially offset from the lean impingement tube (112) relative to a centerline (33) of the combustion section (14).

14. The gas turbine engine (10) of any preceding claim, wherein the gaseous fuel nozzle assembly (48) includes three additional lean impingement tubes (160, 162, 164, 212, 240, 242) arranged with the rich impingement tube (110) and the lean impingement tube (112) in an X-shaped configuration.

15. The gas turbine engine (10) of claim 14, wherein the gaseous fuel nozzle assembly (48) includes a first set of impingement tubes (100) including the rich impingement tube (110), the lean impingement tube (112), and the three additional lean impingement tubes (160, 162, 164, 212, 240, 242); and
wherein the gaseous fuel nozzle assembly (48) includes a plurality of additional sets of impingement tubes (130) disposed in additional X-shaped configurations.
